(19) Europäisches Patentamt
European Patent Office
Office européen des brevets

(11) **EP 3 152 849 B1**

(12) **EUROPEAN PATENT SPECIFICATION**

(45) Date of publication and mention
of the grant of the patent:
**08.08.2018 Bulletin 2018/32**

(21) Application number: **14732559.1**

(22) Date of filing: **24.06.2014**

(51) Int Cl.:
*H04B 1/7107* (2011.01)     *H04B 7/0413* (2017.01)
*H04L 25/02* (2006.01)     *H04L 5/00* (2006.01)
*H04J 11/00* (2006.01)

(86) International application number:
**PCT/EP2014/063286**

(87) International publication number:
**WO 2015/197110 (30.12.2015 Gazette 2015/52)**

(54) **METHOD AND APPARATUS FOR MULTIPLE ACCESS IN A WIRELESS COMMUNICATION SYSTEM**

VERFAHREN UND VORRICHTUNG FÜR MEHRFACHZUGRIFF IN EINEM DRAHTLOSEN KOMMUNIKATIONSSYSTEM

PROCÉDÉ ET APPAREIL POUR ACCÈS MULTIPLE DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.04.2017 Bulletin 2017/15**

(60) Divisional application:
**18171670.5**

(73) Proprietor: **Huawei Technologies Co. Ltd.**
**Shenzhen, Guangdong 518129 (CN)**

(72) Inventors:
• **NASIRI KHORMUJI, Majid**
  **S-16440 Kista (SE)**
• **POPOVIC, Branislav M.**
  **S-16440 Kista (SE)**

(74) Representative: **Kreuz, Georg Maria**
**Huawei Technologies Duesseldorf GmbH**
**Riesstrasse 8**
**80992 München (DE)**

(56) References cited:
**EP-A1- 2 151 936     EP-A2- 1 249 980**
**US-A1- 2010 278 132**

**Description**

TECHNICAL FIELD

The aspects of the present disclosure relate generally to wireless communication systems and in particular to multiple channel access in a massive multi-input multi-output wireless communication systems.

BACKGROUND

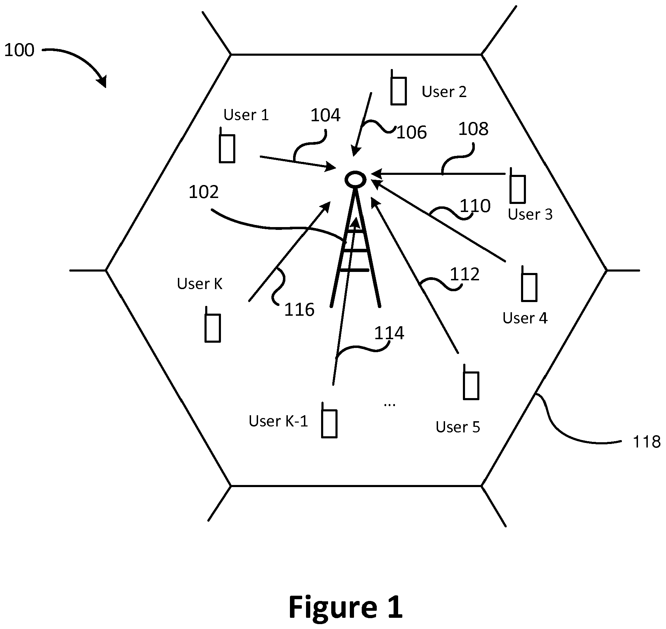

The proliferation of modern wireless communications devices, such as cell phones, smart phones, and tablet devices, has seen an attendant rise in the numbers of users and devices seeking connections. Future communication systems will be expected to provide concurrent connections for massive numbers of users and devices. For example, consider the communication system 100 illustrated in Figure 1 showing a typical cell 118 of a mobile wireless communication network. The cell 118 supports a plurality of users, User 1 through User K, communicating with a base station 102. Each user, User 1 through User K, transmits a data stream, 104 through 116, to the base station 102 at about the same time. To support concurrent communication with a large number of users a cell, such as cell 118, will need to implement a multiple access solution to separate the individual data streams 104 through 116 from inter-user interference, which may also be referred to as crosstalk interference. Classical multiple access solutions such as time-division multiple access (TDMA) and frequency division multiple access (FDMA) have been incorporated into current communication standards and are widely used in commercial communication systems. In TDMA, the available time for transmission is divided among users by scheduling each user in non-overlapping time slots. Users take turns transmitting so one user does not interfere with the transmission of another user. By scheduling users in non-overlapping time slots, TDMA has no inter-user interference. However, dividing transmission time among all users' results in a severe loss of spectral efficiency.

An alternative to separating users in time, as is done in TDMA, is to separate users in frequency by allocating different portions of the available bandwidth to different users. Separating users with frequency is referred to as FDMA. In an FDMA system a receiver separates users in the frequency domain such that no inter-user interference is observed. To provide concurrent independent transmission of multiple users, FDMA consumes additional bandwidth which is a scarce resource. Thus FDMA, similar to TDMA, sacrifices spectral efficiency to separate users.

One common realization of FDMA is orthogonal frequency division multiple access (OFDMA) which has been adopted in a number of current wireless standards such as Long Term Evolution (LTE) and LTE-Advanced (LTE-A) developed by the third generation partnership project (3GPP). OFDMA uses a previously unused sub-block known as a cyclic prefix when transmitting data to create an effective multi-path wireless channel that appears as a single-path channel resulting in simpler receiver design. However, the cost of this simplicity is a loss of diversity.

To avoid the spectral inefficiencies of TDMA and FDMA and better utilize the available time-frequency resources, multiple access solutions based on signal space have attracted attention. These signal space solutions include code, modulation, and interleaver type multiple access schemes. These solutions use characteristics of the signal space to separate simultaneous transmissions from multiple users. For example code division multiple access (CDMA), along with some of its variations, such as those that make use of low density signatures, have become popular and found support in commercial standards. In general, maintaining perfect independence in the code domain such that interfering signals can be reliably separated is a challenging task. Other code and signal space multiple access strategies, such as interleave division multiple access (IDMA), share the same basis as CDMA and suffer similar drawbacks and limitations.

Another multiple access technique is space division multiple access (SDMA) which allows multiple users to share the same time-frequency resources and relies on the location of users within the coverage area to provide signal separation. The receiver and/or transmitter in an SDMA system needs to be equipped with multiple antennas to provide the ability to separate the transmitted and received beams associated with different users. Separation is possible because spatially different beams create limited interference with each other. Spatially based solutions have been incorporated into some current communication system standards such as LTE.

Recent advances in theory and hardware have made devices with multiple antennas available and the trend is toward having increasing numbers of active antenna elements in an array. This trend is reflected in industry standards where the newer releases support multi-input multi-output (MIMO) links with larger numbers of antenna ports. Further increases in the number of antenna elements, particularly in base stations, is envisioned as an attractive solution to improve the spectral efficiency of future communications systems. These larger systems with many active antenna elements are typically known as massive MIMO (mMIMO), and may also be referred to as large-scale antenna systems, very large MIMO, hyper MIMO, or full-dimension MIMO.

To enable SDMA within mMIMO in a cell such as the cell 118 illustrated in Figure 1, the channel matrix between transmit and receive antennas should be known. Channel estimation is essential because it allows separation of the data streams 104 through 116 sent by different users, User 1 through User K. In general, a channel matrix is used to define the transfer characteristics between a set of transmit antennas and receive antennas and will be different for each data stream or user. These channel matrices can be viewed as spatial signatures generated by the environment and as such are variable and need to be learnt. Once estimated, these spatial signatures can be used to perform spatial filtering at a receiver or spatial precoding at a transmitter to allow concurrent transmission and reception of multiple data streams 104 through 116 from multiple users, User 1 through User K, with negligible or no inter-user interference.

Estimation of channel characteristics between different nodes, such as access nodes, users, base stations, radio heads, hyper transmitters, etc., is generally done by transmitting signals known to both the transmitter and receiver in predetermined time slots. These signals are referred to as reference signals/symbols or pilot symbols and sending these pilot symbols allows estimation of the unknown radio channel between transmit and receive nodes. However, their use generally results in a loss of spectral efficiency because resources used to transmit pilot symbols are not available for data transmission. Thus it is desirable to keep the number of transmitted pilot symbols as low as possible while maintaining adequate channel estimation. The number and density of pilot symbols depends on the number of antennas and the time-frequency characteristics of the channel.

In general when learning a channel (for example a channel that can be modeled by an equivalent complex number affecting the narrowband transmitted signal) at least one linear equation is needed for each unknown to be learnt in order to obtain a meaningful estimation of the channel. This is also true in the particular case where antenna spacing is configured such that it results in a full rank channel matrix. To learn a downlink channel from a base station with $N_b$ antennas to $K$ users each with $N_u$ antennas, at least $N_b$ pilots symbols are needed; i.e. one pilot symbol per base station antenna. Alternatively $N_b$ orthogonal sequences of length $N_b$ (or spanning a subspace with dimension $N_b$) are required. For uplink transmission, the required number of pilot symbols changes to $KN_u$, which means the number of pilot symbols increases linearly with the number of antennas at the user equipment. Thus uplink transmission does not scale favorably for massive antenna arrays.

One solution to this problem is to use channel reciprocity. In a system where the uplink and downlink transmissions occur over the same frequency band it can be assumed that the uplink and downlink channels are the same at a given time instant. With this assumption, time division duplex (TDD) operation allows using a number of pilot symbols that is the smaller of the number of antennas at the base station, $N_b$, and the number of users times the number of antennas as the user equipment, $KN_u$, as shown by equation (1):

$$\min\{KN_u, N_b\}. \qquad\qquad (1)$$

In practice the number of antenna ports for a mobile user is kept low to allow smaller size and simpler processing which provides user equipment with longer battery life and lower cost. However, the base station can afford a larger number of antenna ports so in general the number of antenna ports at the base station is much larger than the number of antenna ports at the user equipment: $N_u << N_b$. For example in a scenario with mMIMO at the base station and $K$ users, each user having a single antenna, the required number of pilot symbols necessary to learn the uplink and downlink channel in TDD mode is equal to the number of

users, $K$. In mMIMO systems, it is expected to have $K << N_b$, which results in an affordable overhead, or reduction in spectral efficiency, due to transmission of the pilot symbols.

The required density of pilot symbols depends on the radio channel characteristics and how the characteristics change over time and frequency. Variations in time depend on a variety of factors including the mobility of the nodes, such as mobile users. The faster a user moves, the faster the channel changes in time due to greater Doppler Effect. It can be assumed the radio channel remains unchanged within a certain time interval, referred to as a coherence interval $T_c$, and is a function of the carrier frequency and the velocity of the mobile nodes. To learn the channel between a transmit antenna and receive antenna during a coherence interval $T_c$, at least one pilot symbol per coherence interval is needed. Similarly, a radio channel that varies in frequency is generally characterized by the coherence bandwidth, $B_c$ which depends on the delay profile of the channel and the symbol duration. Thus, in order to learn a TDD mode radio channel in the time-frequency grid for mMIMO communication in a cell with $K$ users and each having a single antenna, $K$ orthogonal pilot symbols, each associated to a user, are required to learn a time-frequency grid of the size $T_c \times B_c$.

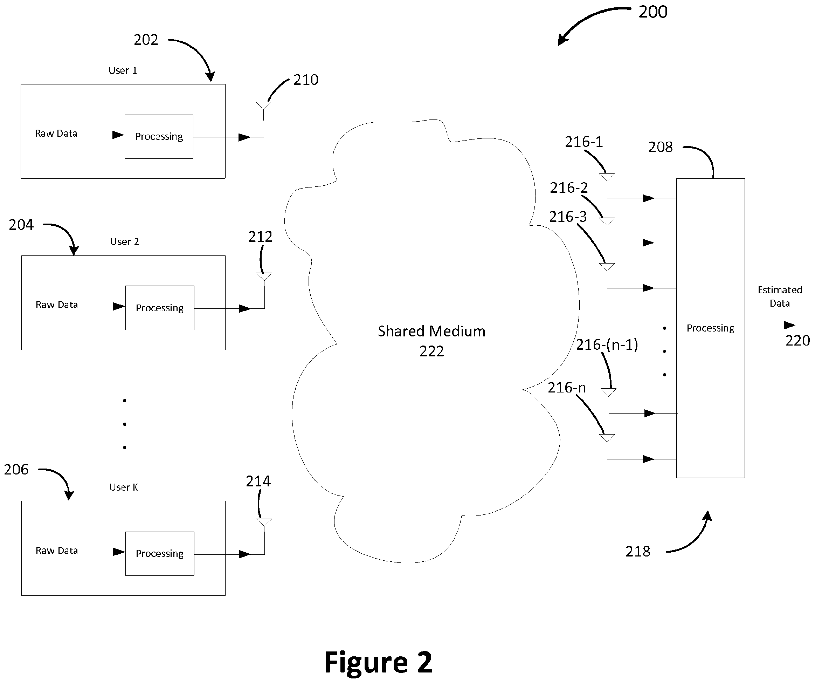

SDMA can be used to facilitate massive concurrent connectivity of users. However, enabling SDMA requires acquiring effective estimates of the radio channel between transmit and receive antennas for all the users. Figure 2 illustrates a multiple-access channel, generally indicated by numeral 200, with K users, 202, 204, 206, each having a single antenna, 210, 212, 214 communicating through a shared medium 222 with a receiver 208. The receiver 208 includes a large array of antenna ports or antennas labelled as 216-1 through 216-n. Estimation of the channel between a transmit and receive antenna can be achieved by having the transmitting nodes send pilot symbols which are known at the receive nodes. The location these pilot symbols in the time-frequency grid and the associated value of each pilot symbol are generally predetermined. To support adequate estimation pilot symbols sent from each user, 202, 204, 206 should be periodic, with the number of symbols, $N$, in a period or symbol sequence equal to the coherence interval, $T_c$, times the coherence bandwidth, $B_c$: $N = T_c B_c$. This period allows a receiver to adequately track channel variations over time and frequency. Once an adequate estimate of the radio channel is obtained a mMIMO receiver 218 can generate an estimate of the transmitted data 220.

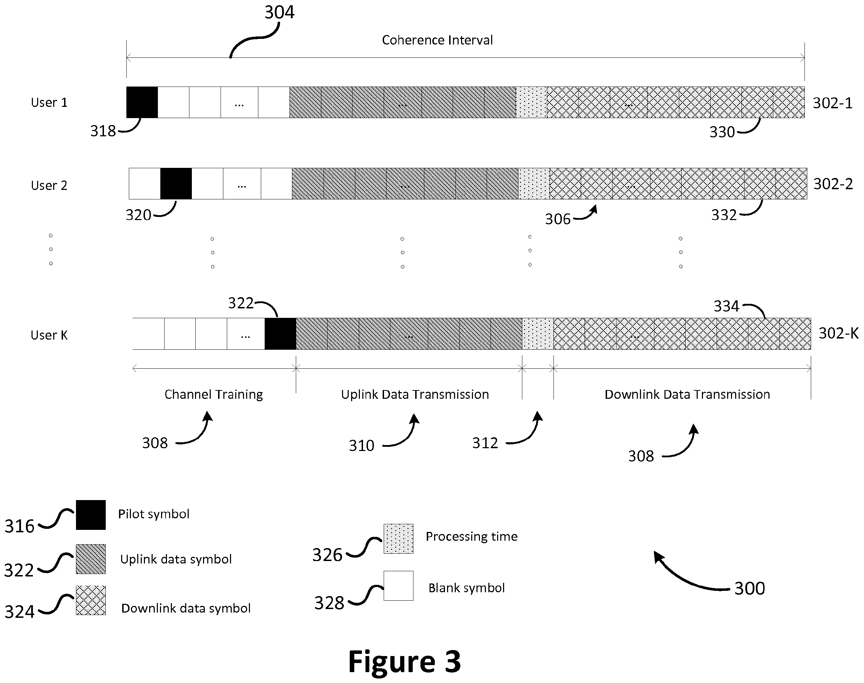

Figure 3 illustrates a conventional transmission protocol 300 used in TDD systems that makes use of the coherence interval 304 described above. Transmission protocol 300 coordinates $K$ symbol streams 302-1, 302-2, through 302-n, transmitted from $K$ users, User 1 through User $K$, all sharing the same frequency resources. Each symbol stream, 302-1 through 302-n, is periodic with a period of one coherence interval 304 and is divided into a number $N$ time slots or symbol durations, such as the time slot indicated by numeral 306. The sequence of $N$ symbols transmitted during one coherence interval 304 is referred to herein as a symbol sequence. Each symbol sequence, 302-1, 302-2, 302-3, which represents the total transmission time 304 over $N$ symbol durations or time slots, is divided into four non-overlapping phases: channel training 308, uplink data transmission 310, processing time 312, and downlink data transmission 314.

Channel training 308 is used to learn the channel between the users and the base station. During channel training 308 each user, User1 through User $K$, transmits a known pilot symbol 316 during a different time slot so that the pilot symbols 316 do not interfere with each other. As convention used herein, the first user, User 1, transmits its pilot symbol 316 during the first time slot 318, the second user, User 2, transmits its pilot symbol 316 during the second time slot 320, and continuing through the last user, User $K$, that transmits its pilot symbol 316, during the $K^{th}$ time-slot 322. When one user, such as User 2, is transmitting a pilot symbol 316, all other users, such as User 1 and User 3, through User $K$, are not transmitting any data. This results in an orthogonal pilot symbol 316 transmission that is free of interference from other symbol sequences.

In Figure 3 a blank symbol 328 is used to represent a symbol duration or time slot during which no signal is transmitted. In the case of a mMIMO system, one orthogonal pilot symbol 316 per coherence interval 304 per user, User 1 through User K, is sufficient to acquire the channel and to allow meaningful channel estimation. As used herein the term orthogonal refers to signals that do not interfere with each other and non-orthogonal refers to signals that do interfere with each other. Thus for $K$ users, $K$ orthogonal pilot symbols 316 need to be transmitted in $K$ time-frequency resources 306 over each coherence interval 304.

The second phase of protocol 300 is uplink data transmission 310 wherein the uplink data of all users, User 1 through User $K$, are transmitted over the same time-frequency resources in a non-orthogonal fashion such that a base station such as base station 208 illustrated in Figure 2, receives a superposition of all transmitted uplink data symbols 322. The superposed uplink data symbols, for example symbols 330, 332, 334, are then separated using SDMA at the receiver to recover the individual uplink data symbols 322 of each individual user, User 1 through User $K$.

After the uplink data transmission phase 310 completes, a processing time phase 312, which is represented by the time slots marked as processing time 326, is needed to perform channel estimation and precode the user data for downlink transmission. In certain systems, the required processing time is less than one time slot or symbol duration allowing the processing time phase 312 to be skipped.

The last phase of the transmission protocol 300 is the downlink data transmission phase 314 during which the downlink data symbols 324 for all users, User 1 through User $K$, are precoded using the channel estimates, and transmitted over the same time-frequency resources in a non-orthogonal fashion over the same time-frequency resources.

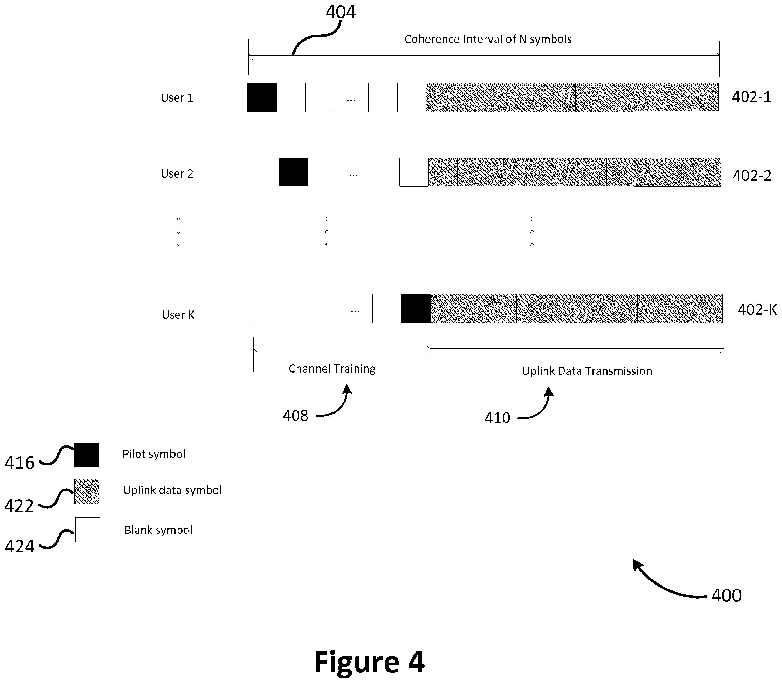

The duration or number of time slots in the uplink data transmission phase 310 and downlink data transmission phase 314 can be adjusted based on the amount of uplink and downlink data needing transmission. In certain instances there is no downlink data transmission and the transmission protocol 300 includes only the first two phases, orthogonal channel training 308, followed by non-orthogonal uplink data transmission 310. For the case when there is no downlink transmission 314 or for the case of Frequency-Division Duplex (FDD), the transmission protocol contains only the two first phases; orthogonal channel training 308 followed by non-orthogonal uplink transmission 310 of all users' data, as depicted in Figure 4.

Figure 4 illustrates a conventional transmission protocol 400 as used in FDD transmission. The transmission protocol 400 includes a set *of K* symbol sequences 402-1, 402-2, 402-K transmitted by $K$ users, User 1, User 2, through User K. Each symbol sequence, 402-1, 402-2, 402-K, occupies the same set of time-frequency resources within a coherence interval 404. During the channel training phase 408 a single pilot symbol 416 is transmitted in each symbol sequence and the other symbol sequences do not transmit. A time slot during which there is no transmission is represented in Figure 4 as a blank symbol 424. Because the other symbol sequences are silent there is no interference in the pilot symbols allowing the channel to be reliably estimated. Once all of the symbol sequences 402-1, 402-2, 402-K, have been trained, the uplink data transmission phase 410 begins. A receiver can use the channel estimates in SDMA techniques to recover the interfering data symbols.

In a mMIMO system using a transmission scheme such as the FDD transmission scheme 400 illustrated in Figure 4, the receiver can separate the uplink data of different users without inter-user interference if the spatial channels are independent. The optimal number of the coordinated users for successful decoding can be obtained by maximizing the total number of transmitted symbols that are separable at the receiver as given by equation (2):

$$\max_{1 \leq K \leq N-1} K(N - K) \tag{2}$$

where the maximum is taken over the active number of users, *K,* for a given coherence interval spanning N symbols. Here it is assumed that all data symbols contain equal information; i.e. all users employ the same modulation order. The above optimization leads to the conclusion that the coherence time should be equally divided for the channel training and data transmission. So the optimal number of active users operating over the same time-frequency resources should be set to $\frac{N}{2}$ and the total number of data symbols that can be transmitted becomes $\frac{N^2}{4}$ data symbols.

Another problem to be considered for future communications systems is energy efficiency, especially with regard to the signal processing done at the mobile nodes. Signal processing algorithms having low complexity or few operations, drain less processing power and have lower processing latency than more complex algorithms. For the case of mMIMO, certain receiver types have significantly larger computational complexity. For example, receivers employing minimum mean-square error (MMSE) operations require inversion of a very large matrix where other types of receivers rely on algorithms using matrix multiplication, a much simpler operation than matrix inversion.

Thus, there is a need for methods and apparatus that can improve the spectral efficiency of wireless communication channels while reducing the computational complexity at the mobile nodes.

EP1249980 A2 discloses an OFDM signal communication system used in broadband mobile communication.

EP2151936 A1 discloses a method for detecting pilot sequence signal.

US 2010/0278132 A1 discloses techniques for transmitting and detecting for overhead channels and signals in a wireless network.

SUMMARY

It is an object of the present invention to provide an apparatus and techniques that will allow more users to transmit data with greater spectral efficiency in a MIMO and particularly in a mMIMO communication system while providing better energy efficiency at the receiver. The techniques and apparatus disclosed herein are useful in wireless communication systems having a large number of users or mobile devices, and a receiver having a large number of antennas. These techniques and apparatus allow communication of joint data and pilot symbols using a transmitter-receiver structure that enables sequential estimation of channel gain of each user or mobile device and cancellation of interference through SDMA. This new technique is based on semi-orthogonal channel training with concurrent data transmission of a plurality of users with sequential spatial filtering at the receiver and is referred to as semi-orthogonal multiple access (SOMA).

The foregoing and other objects are achieved by the features of the independent claims. Further implementation forms are apparent from the dependent claims, the description and the figures. According to a first aspect of the present invention the above and further objects and advantages are obtained by an access node for use in a wireless communication system. The access node includes a controller configured to coordinate transmission of a plurality of symbol sequences in a coherence interval by transmitting information to a plurality of transmitters, the information indicating a number of time slots in the coherence interval after which a transmitter receiving said information shall begin transmitting its symbol sequence. The access node also includes a receiver comprising a plurality of antennas that are configured to receive the plurality of symbol sequences. A decoder is included to decode the plurality of symbol sequences based on the coordination of the transmission of the plurality of symbol sequences, wherein the decoder is configured to detect a pilot symbol of a second symbol sequence based on a superposition of the pilot symbol with a data symbol of a first symbol sequence and based on an estimation of the data symbol.

In a first possible implementation form of the access node according to the first aspect the controller is configured to select a number of time slots indicated to a transmitter based on an amount of interference the transmitter generates in the plurality of symbol sequences, wherein transmitters generating a lesser amount of interference are sent a lower number of time slots than transmitters generating a greater amount of interference.

In a second possible implementation form of the access node according to the first aspect as such or to the first possible implementation form of the first aspect the number of time slots in the coherence interval is larger than the number of transmitters in the plurality of transmitters.

In a third possible implementation form of the access node according to the first aspect as such or to the first or second implementation form of the first aspect the access node is configured to coordinate the transmission of the plurality of symbol sequences such that all symbol sequences in the plurality of symbol sequences share the same time-frequency resources.

In a fourth possible implementation form of the access node according to the first aspect as such or to any of the preceding first through third implementation forms of the first aspect the controller is configured to provide the information transmitted to the plurality of transmitters such that the information indicates a different number of time slots for different transmitters. In a fifth possible implementation form of the access node according to the first aspect as such or to any of the first through fourth possible implementation forms of the first aspect the first symbol sequence is the first symbol sequence received, and wherein the decoder is configured to estimate a first channel gain associated with the first symbol sequence is based on the first symbol sequence and not any other symbol sequence.

In a sixth possible implementation form of the access node according to the first aspect as such or to any of the preceding first through fifth possible implementation forms of the first aspect the controller is further configured to vary the number of time slots indicated in the information transmitted to a particular transmitter in subsequent coherence intervals.

In a seventh possible implementation form of the first aspect as such or to any of the preceding first through sixth possible implementation forms of the first aspect the decoder is configured to estimate a second channel vector associated with the second symbol sequence by: determining a first channel vector associated with the first symbol sequence; determining the estimation of the data symbol using spatial filtering of the received plurality of symbol sequences based on an estimation of the first channel vector; decoding the estimation of the data symbol to obtain a binary data associated with the data symbol; regenerating a data symbol based on the binary data; cancelling interference from the pilot symbol based on the regenerated data symbol to create a substantially interference free pilot symbol; and generating the estimated second channel vector based on the substantially interference free pilot symbol.

In an eighth possible implementation form of the access node according to the seventh possible implementation form of the first aspect, wherein the decoder is configured to perform a cyclic redundancy check (CRC) on the binary data, and to, when the CRC is a pass, use the regenerated data symbol to estimate the second channel vector, and to, when the CRC is a fail not use the regenerated data symbol.

In a ninth possible implementation form of the access node according to the first aspect as such or to the eighth possible implementation form of the first aspect, decoding the estimation of the data symbol comprises detecting the estimation of the data symbol.

In a tenth possible implementation form of the access node according to the first aspect as such or to any of the preceding first through sixth possible implementation forms of the first aspect, the decoder is configured to estimate a second channel vector by: determining a first channel vector associated with the first symbol sequence; determining the estimation of the data symbol using spatial filtering of the received plurality of symbol sequences based on an estimation of the first channel vector; cancelling interference from the pilot symbol based on the estimation of the data symbol to create a substantially interference free pilot symbol; and generating the estimated second channel vector based on the substantially interference free pilot symbol.

In an eleventh possible implementation form of the access node according to the first aspect as such or to the tenth possible implementation form of the first aspect, the decoder is configured to determine a plurality of estimated channel vectors corresponding to the plurality of symbol sequences, and subsequently decode the plurality of symbol sequences in parallel based on the plurality of estimated channel vectors.

In a twelfth possible implementation form of the access node according to the first aspect wherein the decoder is configured to construct a channel matrix from the plurality of estimated channel vectors and to estimate the data symbols of interfering users using joint spatial processing based on the channel matrix.

In a thirteenth possible implementation form of the access node according to the first aspect the controller is configured to select the number of time slots sent to a transmitter based on an amount of interference the transmitter generates in the plurality of symbol sequences, wherein transmitters generating a lesser amount of interference are sent a lower number of time slots than transmitters generating a greater amount of interference.

In a fourteenth possible implementation form of the access node according to the first aspect the information sent to a transmitter further comprises a set of one or more time slots within a symbol sequence during which no symbol shall be transmitted, and wherein the controller is configured to select the one or more time slots based on an amount of interference the transmitter generates in the plurality of symbol sequences.

According to a second aspect of the present invention the above and further objects and advantages are obtained by a method for coordinating transmission of a plurality of symbol sequences in a coherence interval. The method includes transmitting information to a plurality of transmitters, the information comprising a number of time slots in the coherence interval after which a transmitter shall begin transmitting its symbol sequence, and receiving the plurality of symbol sequences using a plurality of receive antennas, wherein the plurality of symbol sequences comprises one or more superposed data symbols superposed with a pilot symbol. One or more data symbols is then estimated spatial filtering of the one or more superposed data symbols based on one or more estimated channel vectors, wherein each of the one or more estimated channel vectors corresponds to a symbol sequence in the plurality of symbol sequences. Interference is then cancelled from the pilot symbol to generate a substantially interference free pilot signal, the cancelling is based on the one or more estimated data symbols. An estimated channel vector is generated for one symbol sequence in the plurality of symbol sequences based on the substantially interference free pilot symbol associated with the one symbol sequence, and including the estimated channel vector in the one or more estimated channel vectors.

In a first possible implementation form of the method according to the second aspect the number of time slots transmitted to a particular transmitter is varied in subsequent coherence intervals.

In a second possible implementation form of the method according to the second aspect as such or to the first possible implementation form of the second aspect the method further comprises decoding the one or more estimated data symbols to obtain a binary data associated with the one or more data symbols and regenerating the one or more data symbols based on the binary data. Interference is then cancelled from the pilot symbol based on the regenerated one or more data symbols to create a substantially interference free pilot symbol. In a third possible implementation form of the method according to the second aspect as such or to the first or second possible implementation forms of the second aspect when a cyclic redundancy check (CRC) associated with the binary data is a pass, a regenerated data symbol associated with the CRC result is used to estimate the second channel vector, and when the CRC check is a fail the regenerated data symbol is not used.

In a fourth possible implementation form of the method according to the second aspect as such or to the first possible implementation form of the second aspect when an estimated channel vector is determined sequentially for each symbol sequence in the plurality of symbol sequences during successive time slots in the coherence interval, then all the symbol sequences in the plurality of symbol sequences are decoded in parallel based on the determined estimated channel vectors.

According to a third aspect of the present invention the above and further objects and advantages are obtained by a computer program comprising a program code for performing a method according to the second aspect as such or to any of the first through fourth possible implementation forms of the method according to the second aspect when the computer program is run on a computer.

These and other aspects, implementation forms, and advantages of the exemplary embodiments will become apparent from the embodiments described below considered in conjunction with the accompanying drawings. It is to be understood, however, that the description and drawings are designed solely for purposes of illustration and not as a definition of the limits of the invention, for which reference should be made to the appended claims. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

BRIEF DESCRIPTION OF THE DRAWINGS

In the following detailed portion of the present disclosure, the invention will be explained in more detail with reference to the example embodiments shown in the drawings, in which:

Figure 1 illustrates an environment appropriate for practicing embodiments of the present disclosure;
Figure 2 illustrates a multiple access radio channel appropriate for practicing embodiments of the present disclosure;
Figure 3 illustrates a conventional time division duplex transmission protocol;
Figure 4 illustrates a conventional frequency division duplex transmission protocol;
Figure 5 illustrates a semi-orthogonal multiple access transmission protocol in accordance with an embodiment of the present disclosure;
Figure 6 illustrates a flow diagram of a multiple antenna radio receiver in accordance with an embodiment of the present disclosure;
Figure 7 illustrates a block diagram of a local channel estimator incorporating aspects of the disclosed embodiments;
Figure 8 illustrates a block diagram of a local channel estimator for the j$^{th}$ user incorporating aspects of the disclosed embodiments;
Figure 9 illustrates a block diagram of a channel estimator incorporating aspects of the present disclosure;
Figure 10 illustrates a graph comparing the aggregate rate as a function of the number of receive antennas for a system incorporating aspects of the present disclosure;
Figure 11 illustrates a block diagram of an apparatus appropriate for practicing embodiments of the present disclosure;
Figure 12 illustrates a flow chart of a method for use in a SOMA transmission scheme incorporating aspects of the disclosed embodiments;
Figure 13 illustrates a block diagram of a wireless communication system incorporating aspects of the present disclosure;
Figure 14 illustrates a flow chart of a method for use in an access node incorporating aspects of the disclosed embodiments.

DETAILED DESCRIPTION OF THE DISCLOSED EMBODIMENTS

The communication scheme described herein provides a method for communication of joint data and pilot symbols using a transmitter-receiver structure that enables sequentially estimating the channel gain of each transmitter and performing SDMA for interference cancellation. These new multiple access techniques rely on semi-orthogonal channel training and data transmission from a plurality of transmitters along with sequential spatial filtering at the receiver. This new access scheme is referred to herein as semi-orthogonal multiple-access (SOMA).

The disclosed multiple-access scheme, SOMA, utilizes semi-orthogonal pilot and data transmission from different transmitters, or users, in a manner that allows the receiver to perform channel estimation with high enough fidelity to enable separating data streams using spatial filtering so that the filtered data streams may be decoded using single-user decoders. The SOMA transmission scheme will be presented by describing the transmitter structure first and then describing receiver structures that may be used to recover the transmitted data.

**Transmitter**

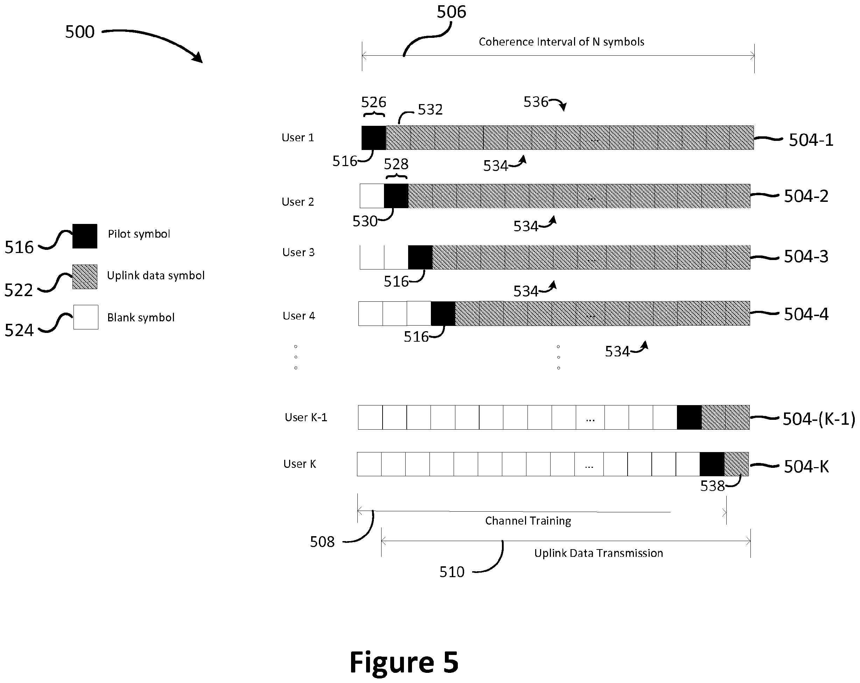

The uplink transmissions of users are arranged as illustrated in Figure 5 where the data transmission of each user, User 1 through User $K$, is represented as a sequence of symbols, 504-1 through 504-K. Each symbol sequence 504-1 through 504-K shown in Figure 5 represents a set of symbols transmitted over a common set of time-frequency resources from a number of transmitters or users, User 1 through User $K$. The SOMA transmission scheme 500 coordinates up to $K$ transmitters or users, User 1 through User , where the number of users is less than the number of time slots or time-frequency resources, $N$, in a coherence interval 506, i.e. $K < N$. A coherence interval is the number of time-frequency resources or time slots over which the channel is approximately constant. The number of time slots, $N$, in a coherence interval can be identified by the type of communication environment and the mobility of the users or a type of channel sounding that estimates this parameter for the users. The term "user" is used herein interchangeably with the term "transmitter." This is done as an aid to understanding where the embodiments are described with respect to an uplink transmission from a user equipment or mobile device to a base station. However it will be readily recognized by those skilled in the art that the apparatus and methods described herein are equally applicable to other types of transmissions between other types of nodes. In certain embodiments it is desirable to include multiple antennas or transmitters in a single user equipment or other type of node allowing multiple symbol streams to be transmitted from each transmitter in the node. Thus in these embodiments the term "transmitter" refers to each transmit device or transmit antenna capable of sending a separate symbol stream. The coordination among users or transmitters may be accomplished by a scheduler, eNodeB, a central or local network controller, or other types of access nodes having radio access to the users or transmitters. Figure 5 depicts an example of how the SOMA transmission scheme 500 is coordinated. In general the number $K$, of users or transmitters scheduled is less than the number of time slots $N$ or symbol durations in the coherence interval 506. In the illustrated embodiment the number of users is set to $K = N - 1$. Alternatively, the number of time slots in the coherence interval 506 may include any number that is greater than the number of users $K$. Each *user j* where $1 \leq j \leq N - 1$, transmits a sequence of symbols, for example the first symbol sequence 504-1, that includes one pilot symbol (pilot symbols are represented by black squares 516) and $N - j$ data symbols (data symbols are represented by the cross hatched squares 522). In the SOMA transmission scheme 500 the channel training phase 508 significantly overlaps the uplink data transmission phase 510 within each coherence interval 506. Each symbol sequence, 504-1 through 504-K, begins with a pilot symbol 516 and is followed directly by one or more data symbols 522. To keep the pilot symbols orthogonal, each user, User 1 through User $K$, waits a different number of time slots before beginning transmission of its symbol sequence, 504-1 through 504-K. These waiting time slots, which are time slots during which no signal is transmitted by certain users, are represented as blank symbols or white square 524 in the illustration of Figure 5. User 1 does not wait any number of time slots and begins transmitting its symbol sequence 504-1 by transmitting a pilot symbol 516 in the first time slot 526. User 2 follows by waiting one time slot 526 then begins transmitting its symbol sequence 504-2 by transmitting a pilot symbol 516 in the second time slot 528. Each subsequent user, User 3 through User $K$, follows in a similar fashion waiting one more time slot than the previous user before beginning transmission of its symbol sequence, 504-3 through 504-K.

Two key properties of the symbol sequences 504 are important to note. The pilot symbols 516 transmitted during different time-frequency resource are orthogonal to each other, i.e. they do not interfere with each other. This allows performing the channel estimation for each user without pilot contamination. The data symbols of user $j$ ($1 < j < N - 1$), consume all the time-frequency resources of users $j + 1 \leq k \leq N - 1$, which are used for transmission of both the pilot symbols 516 and uplink data symbols 522. In the following discussion each user will be referred to using a reference number indicating their position or order in which they begin transmitting their symbol sequence within a coherence interval. Each user, $1 \leq j \leq N - 1$, transmits a symbol sequence that begins with one pilot symbol 516 followed by $N - j$ data symbols 522, where $j$ refers to the order or position, as well as the time slot, in which the users begin transmission. The received signal over the $i^{th}$ time-frequency resource or time slot is given by equations (3) and (4):

$$\boldsymbol{y}_i = \begin{cases} \boldsymbol{h}_i x_{pi} + \sum_{j=1}^{i-1} \boldsymbol{h}_j x_{dj,i} + \boldsymbol{z}_i, & 1 \leq i \leq N-1 \\ \sum_{j=1}^{i-1} \boldsymbol{h}_j x_{dj,i} + \boldsymbol{z}_i, & i = N \end{cases} \quad (3)$$

$$=: \boldsymbol{h}_i x_{pi} \mathbb{I}_{i \neq N} + \sum_{j=1}^{i-1} \boldsymbol{h}_j x_{dj,i} + \boldsymbol{z}_i, \quad 1 \leq i \leq N \quad (4)$$

where

- $\boldsymbol{y}_i$ denotes the received noisy signal vector of dimension $N_b \times 1$,
- $x_{pi}$ denotes the transmitted pilot symbol from user $i$,
- $x_{dj,i}$ denotes the transmitted data symbol from user $j$ over the ith time-frequency resource element, and
- $\boldsymbol{h}_i$ denotes the channel vector between user $i$ and the receiver, which has the dimension $N_b \times 1$.
- $\boldsymbol{z}_i$ denotes the additive white Gaussian noise at the receiver, which has the dimension $N_b \times 1$.
- $N$ is the number of symbols or time slots in each symbol sequence or coherence interval.

Note that as before $N_b$ is the number of receive antennas at the node receiving the signal. The channel vector is a vector of values where each value characterizes the radio channel between a transmitter and one of the receiving antennas.

In the SOMA transmission scheme 500 disclosed herein, the pilot symbols 516 of subsequent users, User 2 through User K, are contaminated by superposed data symbols 534 of the coordinated users that begin transmission of their symbol sequence, 504-1 through 504-K-1, earlier in the coherence interval 506 as illustrated in Figure 5. For example, since all symbol sequences 504-1 through 504-K in a SOMA transmission scheme share the same set of time-frequency resources the pilot symbol 530 in the second symbol sequence 504-2 is contaminated by a superposed data symbol 532 of the first symbol sequence 504-1. Thus, the channel estimation needs to handle the interference from other users and the data detectors need to handle interference from the other user's uplink data symbol 522 as well as the other user's pilot symbols 516.

As can be seen in Figure 5, the first user, User 1, to begin transmitting in the SOMA transmission scheme 500, transmits a longer symbol sequence 504-1 and can transmit a larger amount of data than the subsequent users, User 2 through User $K$. For example, the first user, User 1, can transmit $N - 1$ data symbols 536 while the last users can transmit only 1 data symbol 538. In certain embodiments it is desirable to provide fairer access to the available throughput, or to schedule users needing greater throughput at earlier, i.e. longer, symbol sequences. In these embodiments, the scheduler or controller of the access node may be configured to rearrange the order of users in subsequent coherence intervals such that a particular user can transmit different amounts of data during different coherence intervals.

**Receiver**

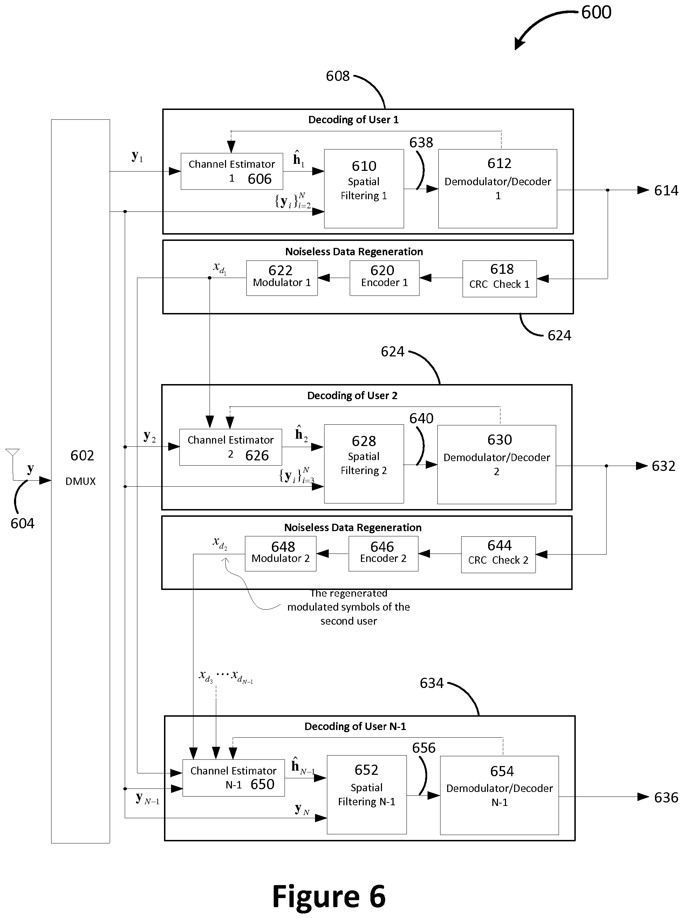

The SOMA transmission scheme 500 provides significant increases in throughput at the cost of introducing inter-symbol interference. Figure 6 illustrates a block diagram of a receiver structure 600 that incorporates sequential spatial filtering and sequential decoding to alleviate the adverse effects of the additional interferences introduced into the received signal during a SOMA transmission scheme 500, such as that shown in Figure 5. The receiver 600 can be part of an access node according to an embodiment of the present invention. The receiver 600 incorporates a de-multiplexer 602 to decompose the received noisy baseband signal 604 into signals associated with the transmitted pilots and each modulated data symbol, $\boldsymbol{y}_1$ through $\boldsymbol{y}_{N-1}$. The receiver 600 sequentially decodes the decomposed received signals, $\boldsymbol{y}_1$ through $\boldsymbol{y}_{N-1}$, using a set of decoders 608, 624, 634, configured to extract the data 614, 632, 636 for each user, User 1 through User $N$ - Irespectively. The first decoder 608 receives a signal $\boldsymbol{y}_1$ associated with the first transmitted pilot symbol. The pilot symbol of the first user in a SOMA transmission protocol 500 is transmitted in an orthogonal fashion, where the first pilot symbol is not interfered with by transmissions from the other users.

Since the first signal $\boldsymbol{y}_1$ contains no interference, a channel estimator 606 can create an estimate of the channel vector $\hat{\boldsymbol{h}}_1$ directly from the noisy input signal $\hat{\boldsymbol{h}}_1$. A spatial filter 610 can use the estimated first channel vector $\hat{\boldsymbol{h}}_1$ to extract

estimates of the modulated data symbols 638 of the first user. The data 638 from the first user can then be recovered by a demodulator/decoder 612. As will be discussed further below, the subsequent decoders use information about the data from previous decoders. In the example receiver embodiment 600, this information is provided by a noiseless data regenerator 616 which regenerates a noise free version of the modulated data symbols $x_{d1}$ from the decoded data 614 of the first user.

The noiseless data regenerator 616 checks the cyclic redundancy check (CRC) results 618 obtained by the decoder 612 when decoding the first user's data 614. This allows the decoder 612 to use only good data packets that have a CRC result of pass and to discard bad data packets when the CRC result is a fail. If the decoded data is correct, as indicated by a CRC result of pass, the decoded data from the first user 614 is encoded by an encoder 620 and modulated by modulator 622 to regenerate the modulated data symbols of the first user $x_{d1}$. The second decoder 624 receives a signal $\boldsymbol{y}_2$ associated with the second pilot symbol that is transmitted by the second user. Referring again to Figure 5, the pilot symbol 530 of the second user, User 2, in a SOMA transmission protocol 500 is superposed with the first data symbol 532 of the first user, User 1, which means it is transmitted in a non-orthogonal fashion over the same time-frequency resource, and is contaminated by interference from the first users' data symbol 532. Since the input signal $\boldsymbol{y}_2$ of Figure 6 includes both the pilot symbol 530 transmitted by user 2 as well as interference from the data symbol 532 transmitted by the first user, the interference needs to be removed in order to obtain a reliable estimate of the second channel vector $\hat{\boldsymbol{h}}_2$. Thus the second channel estimator 626 uses the regenerated modulated symbol $x_{d1}$ and the estimated channel vector $\hat{\boldsymbol{h}}_1$ of the first user to cancel the interference the superposed data symbol introduces into the received signal $\boldsymbol{y}_2$ to create an estimate of the second channel vector $\hat{\boldsymbol{h}}_2$.

The spatial filter 628 uses the estimated second channel vector $\hat{\boldsymbol{h}}_2$ to extract the modulated data symbols 640 of the second user. This is referred to herein as sequential spatial filtering because the second spatial filter 628 needs to have the results of the first channel estimator 606 and first spatial filter 610 before it can extract the modulated data symbols 640 of the second user. The data 640 from the second user can then be recovered by a demodulator/decoder 630.

A second noiseless data regenerator 642 is included to regenerate a noise free versions of the modulated data symbols $x_{d2}$ of the second user. The second noiseless data regenerator 642 checks the CRC results 644 obtained by the second decoder 624 when decoding the second user's data 632. If the decoded data 632 is correct, as indicated by the CRC result of pass, the decoded data 632 from the second user is encoded by an encoder 646 and modulated by modulator 648 to regenerate the modulated data symbols of the second user $x_{d2}$.

Decoder 634 decodes the signal $\boldsymbol{y}_{N-1}$, of the last user, designated $N$ - 1, similar to the other users where a channel estimator 650 creates an estimate of the channel vector $\hat{\boldsymbol{h}}_{N-1}$. A spatial filter 652 obtains the modulated symbols 656. The modulated symbols 656 are then demodulated and decoded using demodulator/decoder 654 to obtain the data 636 sent by this last user $N$ - 1. Notice that the channel estimator 650 of the last user $N$ - 1receives regenerated modulated symbols from all prior channels $x_{d3}\cdots x_{dN-1}$. This is because the pilot symbol 516 of the last user $N$ - 1, illustrated in Figure 5, is superposed with a data symbol from all prior users and is therefore contaminated by interference from all the prior users. Since User $N$ - 1 is the last channel there is no need to regenerate the modulated symbol so there is no noiseless data regenerator for the last channel.

**Sequential Spatial Filtering**

The receiver 600 employs a demultiplexer to decompose the received noisy signal into signals associated with the transmitted pilot symbols and each modulated data symbol. Sequential spatial filtering is then applied to recover the modulated data symbols of each user. Because User 1 is the first user to begin transmitting its symbol sequence in a coherence interval the pilot symbol of User 1 does not have any data symbols superposed on it. Thus the received noisy pilot symbol $\boldsymbol{y}_1$ of the first user is given by equation (5):

$$\boldsymbol{y}_1 = \boldsymbol{h}_1 x_{p1} + \boldsymbol{z}_1, \qquad\qquad (5)$$

where $x_{p1}$ is the received pilot symbol of User 1, and $\boldsymbol{z}_1$ is additive white Gaussian noise (AWGN). With a SOMA transmission protocol 500 as described above, user 1 is the only user transmitting during the first time-frequency resource so the received noisy signal associated with the first pilot, $\boldsymbol{y}_1$, does not contain any interference from the other users. The estimated channel vector, $\hat{\boldsymbol{h}}_1$, can be written as $\hat{\boldsymbol{h}}_1 = \boldsymbol{h}_1 + \boldsymbol{z}_{e_1}$, where $\boldsymbol{z}_{e_1}$ denotes the channel estimation noise. The estimated channel vector $\hat{\boldsymbol{h}}_1$ is then used for spatial filtering 610 of the data of the first user.

Since all the symbol sequences are transmitted over the same set of time-frequency resources the received data over the ith time-frequency resource element for $2 \leq i \leq N$ is given by equation (6):

$$y_i = h_i x_{pi} \mathbb{I}_{i \neq N} + \sum_{j=1}^{i-1} h_j x_{dj,i} + z_i,$$

(6)

(refer to equation (4) above for symbol definitions of equation (6)). The receiver can now use the estimated channel vector, $\hat{h}_1$, of the first user to perform normalized matched filtering or spatial filtering 610 of the received noisy signal associated with the transmitted data, $\{y_i\}_{i=2}$, for each successive symbol $2 \leq i \leq N$ to obtain the modulated symbol transmitted by the first user in the $i^{th}$ time slot, $\tilde{y}_i$, as shown in equation (7):

$$\tilde{y}_i = \frac{1}{N_t} \hat{h}_1^\dagger y_i = \underbrace{\frac{1}{N_t} h_1^\dagger h_1 x_{d1,i}}_{\substack{\text{Information of first} \\ \text{user over the ith} \\ \text{time slot}}} + \underbrace{\frac{1}{N_t} h_1^\dagger h_i x_{pi} \mathbb{I}_{i \neq N}}_{\substack{\text{Interference due the} \\ \text{pilot of ith user}}}$$

$$+ \underbrace{\frac{1}{N_t} \sum_{j=2}^{i-1} h_1^\dagger h_j x_{dj,i}}_{\substack{\text{Interference due to other} \\ \text{user data}}} + \underbrace{\frac{1}{N_t} h_1^\dagger z_i}_{\text{AWGN}}$$

(7)

$$+ \underbrace{\frac{1}{N_t} z_{e1}^\dagger \left( h_i x_{pi} \mathbb{I}_{i \neq N} + \sum_{j=1}^{i-1} h_j x_{dj,i} + z_i \right)}_{\substack{\text{Propagation of the channel} \\ \text{estimation error}}}$$

For mMIMO with independent fading where the number of receive antennas $N_b$ is very high, $N_b \gg 1$, we have the equality of equation (8):

$$\frac{1}{N_t} h_j^\dagger h_i \xrightarrow{a.s.} \mathbb{E}\{h_{jk}^\dagger h_{ik}\} = \delta_{ij} = \begin{cases} 1, & i = j \\ 0, & i \neq j \end{cases}$$

(8)

where the equality follows for i.i.d (independent and identically distributed) channels from the law of large numbers as the number of antennas increases. It is assumed in this analysis that the antenna spacing is configured such that the space between antennas is approximately half of the wavelength of the carrier signal so that the channel coefficients are independent. It is also interesting to note that even for line-of-sight linear array this property holds where the channel gain for user $k$, from antenna $j$ can be written as $h_{kj} = e^{2\pi i \frac{d}{\lambda}(j-1)\sin(\theta_k)}$ where $d$ is the antenna spacing, $\lambda$ is the wavelength of the carrier frequency and $\theta_k$ is the angle of arrival for user $k$. Similarly the terms associated to the channel noise and the channel estimation error for the massive MIMO vanish as shown in equation (9) and equation (10):

$$\frac{1}{N_t} h_1^\dagger z_i \xrightarrow{a.s.} \mathbb{E}\{h_{jk}^\dagger\}\mathbb{E}\{z_{ik}\} = 0,$$

(9)

$$\frac{1}{N_t} z_{e1}^\dagger h_i \xrightarrow{a.s.} \mathbb{E}\{z_{e1,k}^\dagger\}\mathbb{E}\{h_{ik}\} = 0.$$

(10)

Thus the interference from both the pilot and data symbols is cancelled. The receiver can then use the spatially filtered signal $\tilde{y}_i$ to perform conventional single-user decoding to obtain the original transmitted data. Alternatively, single-user symbol detection can be used in uncoded systems to recover the original transmitted data.

Referring again to Figure 6, the second decoder 624 is used to decode the data transmitted by a second user, User 2. As described above, User 2 is the second user to begin transmitting data in a coherence interval so the pilot symbol 530 of User 2, illustrated in Figure 5, will be superposed with a data symbol 532 from User 1 and will therefore include interference from the data symbol of the first user transmitted during the same time slot. The second estimator 626 will use knowledge of the pilot symbol 530 and the received noisy copy of the pilot symbol $y_2$ to obtain an estimate of the channel gain $\hat{h}_2$. The received signal over the second time slot $y_2$ contains the pilot signal of the second user along with interference from the first users data and is given by equation (11):

$$y_2 = h_2 x_{p2} + h_1 x_{d1,2} + z_2. \tag{11}$$

Note that the transmitted pilot signal $x_{p2}$ of the second user is contaminated by the data $x_{d1,2}$ of the first user transmitted during the second time slot or time-frequency resource. In order to perform channel estimation for the second user, the interfering signal contributed by the first user needs to be cancelled or removed from the received signal $y_2$. To perform this cancellation the receiver needs to know the channel vector, $\hat{h}_1$, of the first user and the data symbol, $x_{d1,2}$, that was transmitted by the first user. The receiver has an estimate of the first channel vector, $\hat{h}_1$, from the first channel estimator 606 and has recovered the modulated symbol of the first user, $x_{d1,2}$, from the first demodulator/decoder 612. These values can be used by the second channel estimator 624 to cancel interference in the received noisy signal associated with the second user $y_2$ and estimate the second channel vector $\hat{h}_2 = \hat{h}_2 + z_{e_2}$, where the noise component $z_{e_2}$ is given by equation (12):

$$z_{e_2} = z_{e_1} x_{d1,2} + z_2 \tag{12}$$

The estimation noises from the first estimator $z_{e_1}$ and second estimator $z_{e_2}$ are uncorrelated to the actual channel vectors, and for Rayleigh fading they become independent from each other.

As shown in equation (4) above the received data over $i$th time-frequency resource where $3 \leq i \leq N$ is given by equation (13):

$$y_i = h_i x_{pi} \mathbb{I}_{i \neq N} + \sum_{j=1}^{i-1} h_j x_{dj,i} + z_i \tag{13}$$

The receiver can use the estimated channel vector of the second user $\hat{h}_2$ that was obtained via the received signal over the second timeslot $y_2$, to perform the normalized matched filtering for generation of the modulated symbols for an $i^{th}$ time slot where $3 \leq i \leq N$, as shown by equation (14):

$$\tilde{y}_i = \frac{1}{N_t} \widehat{h}_2^\dagger y_i = \underbrace{\frac{1}{N_t} h_2^\dagger h_2 x_{d2,i}}_{\substack{\text{Information of second} \\ \text{user over the ith} \\ \text{time slot}}} + \underbrace{\frac{1}{N_t} h_2^\dagger h_i x_{pi} \mathbb{I}_{i \neq N}}_{\substack{\text{Interference due the} \\ \text{pilot of ith user}}}$$

$$+ \underbrace{\frac{1}{N_t} \sum_{j=2}^{i-1} h_2^\dagger h_j x_{dj,i}}_{\substack{\text{Interference due to other} \\ \text{user data}}} + \underbrace{\frac{1}{N_t} h_2^\dagger z_i}_{\text{AWGN}} \qquad (14)$$

$$+ \underbrace{\frac{1}{N_t} z_{e2}^\dagger \left( h_i x_{pi} \mathbb{I}_{i \neq N} + \sum_{j=1}^{i-1} h_j x_{dj,i} + z_i \right)}_{\substack{\text{Propagation of the channel} \\ \text{estimation error}}}$$

Similarly, for mMIMO where the number of receive antennas $N_b$ is very high, i.e. $N_b \gg 1$, the interference terms due to the pilot symbol and data symbols of the other users vanish after the normalized spatial filtering. The second decoder 630 can perform conventional decoding or detection using the spatially filtered signal $\tilde{y}_i$ to obtain the data transmitted by User 2. Now consider channel estimation for a subsequent user, designated as the $j^{th}$ user for convenience, with $3 \leq j \leq N - 1$, where $N$ is the number of time slots or time-frequency resources in a coherence interval and the number of users is less than $N$, for example the number of users may be $N - 1$. When recovering the transmitted data of the $j^{th}$ user, the receiver needs to estimate the channel vector $h_j$ associated with the $j^{th}$ user. In accordance with the SOMA transmission scheme 500 described above, the received signal over the $j^{th}$ time slot contains the pilot signal of the $j^{th}$ user along with interference from data transmitted by all previous users as is shown in equation (15):

$$y_j = h_j x_{pj} + \sum_{k=1}^{j-1} h_k x_{dk,j} + z_j \qquad (15)$$

For good channel estimation the receiver needs to separate the interfering signals from the desired pilot signal. This can be accomplished in a fashion similar to the way the second user, User 2 cancelled interference from the first user, User 1. The receiver has estimates of channel vectors $h_1$ to $h_{j-1}$ as well as the recovered data symbols $x_{d1,j}$ to $x_{dj-1,j}$. Using these values the $j^{th}$ channel estimator can cancel the interfering signals and estimate the channel vector $\widehat{h}_j$. The received signal over ith time slot for $j + 1 \leq i \leq N$ is given by equation (16):

$$y_i = h_i x_{pi} \mathbb{I}_{i \neq N} + \sum_{j=1}^{i-1} h_j x_{dj,i} + z_i \qquad (16)$$

The estimated channel vector of the $j^{th}$ user, which was obtained from the received noisy signal $y_j$, can be used to perform the normalized matched filtering for $j + 1 \leq i \leq N$ as shown by equation (17):

$$\tilde{y}_i = \frac{1}{N_t}\widehat{\boldsymbol{h}}_j^\dagger \boldsymbol{y}_i = \underbrace{\frac{1}{N_t}\boldsymbol{h}_j^\dagger \boldsymbol{h}_j x_{dj,i}}_{\substack{\text{Information of the jth} \\ \text{user over the ith} \\ \text{time slot}}} + \underbrace{\frac{1}{N_t}\boldsymbol{h}_j^\dagger \boldsymbol{h}_i x_{pi}\mathbb{I}_{i\neq N}}_{\substack{\text{Interfrence due the} \\ \text{pilot of ith user}}}$$

$$+ \underbrace{\frac{1}{N_t}\sum_{k=2}^{i-1}\boldsymbol{h}_j^\dagger \boldsymbol{h}_k x_{dk,i}}_{\substack{\text{Interfrence due to other} \\ \text{user data}}} + \underbrace{\frac{1}{N_t}\boldsymbol{h}_j^\dagger \boldsymbol{z}_i}_{\text{AWGN}} \qquad\qquad (17)$$

$$+ \underbrace{\frac{1}{N_t}\boldsymbol{z}_{e_j}^\dagger\left(\boldsymbol{h}_i x_{pi}\mathbb{I}_{i\neq N} + \sum_{j=1}^{i-1}\boldsymbol{h}_j x_{dj,i} + \boldsymbol{z}_i\right)}_{\substack{\text{Propagation of the channel} \\ \text{estimation error}}}$$

As described above, for mMIMO where the number of receive antennas $N_b$ is very high, i.e. $N_b \gg 1$, the interference terms due to the pilot symbol and data symbols of the other users vanishes after normalized spatial filtering. Thus the $j^{th}$ decoder can perform the conventional decoding using the spatially filtered signal $\tilde{y}_j$.

The receiver 600 illustrated in Figure 6 and the subsequent analysis employs sequential decoding to recover the transmitted data before regenerating an associated modulated symbol. In sequential decoding one user uses knowledge of the decoded data to regenerate modulated data symbols of all prior users when estimating the channel vector and performing spatial filtering. By decoding the data streams sequentially, a receiver, such as the receiver 600, can use the cyclic redundancy check (CRC) information obtained during demodulation and decoding/detection of a symbol to control error propagation to the next channel estimator. For example, when the CRC of a symbol is false, a regenerated modulated symbol is not generated by the noiseless data regenerator, and the subsequent channel estimators can use an alternate signal for cancellation such as the estimated data symbol generated by spatial filtering.

## Parallel Decoding

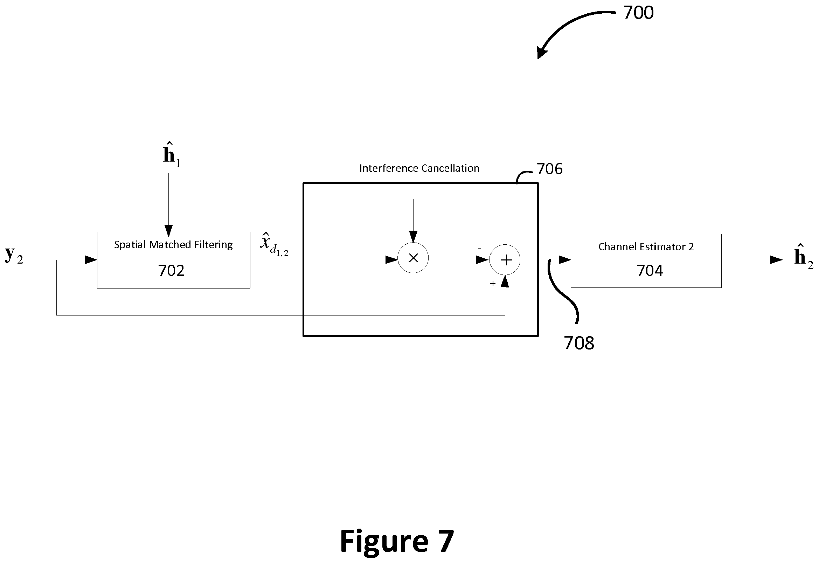

In further embodiments a receiver may employ sequential spatial filtering as described above followed by parallel decoding. In parallel decoding embodiments the receiver may perform local channel estimation prior to the full decoding of the data of the other users. For parallel decoding the channel gains of the interfering users need to be known. Parallel decoding allows a faster decoding procedure where all users can be decoded in parallel. This reduces the processing burden leading to a more energy efficient solution. Figure 7 illustrates a block diagram of a local channel estimator 700 for the second user in a receiver employing a parallel decoding scheme. To decode the data of the second user, the receiver needs to acquire an estimate of the corresponding channel gain, $\widehat{\boldsymbol{h}}_2$. However, the received signal, $\boldsymbol{y}_2$, associated with the pilot symbol of the second user contains interference from data transmitted by the first user. Therefore, to estimate the channel gain, $\widehat{\boldsymbol{h}}_2$, and decode the data of the second user, the receiver needs an estimate of the channel gain, $\widehat{\boldsymbol{h}}_1$, of the interfering user. The received signal, $\boldsymbol{y}_2$, is input to a spatial matched filter 702 along with the estimated channel vector of the first user, $\widehat{\boldsymbol{h}}_1$, to create an estimate of the modulated data symbol of the first user, $x_{d1,2}$. The modulated data symbol, $x_{d1,2}$, is then used along with the estimated channel vector $\widehat{\boldsymbol{h}}_1$ of the first user, for interference cancellation 706 to remove interference in the received signal, $\boldsymbol{y}_2$. Once the interference is removed, a channel estimator 704 can generate an estimated channel vector $\widehat{\boldsymbol{h}}_2$ for the second user, based on the substantially interference free signal 708. In the channel estimator 700 decoding of the second user is delayed only by channel estimation of the first user thereby allowing faster decoding of the second user. Note that this delay is also present in the state-of-art solutions.

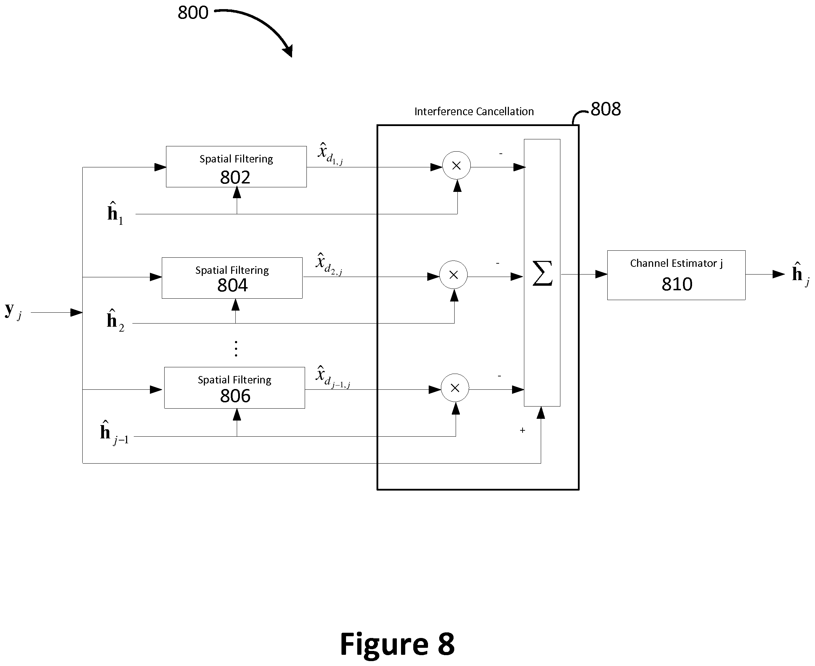

Figure 8 illustrates a block diagram of a local channel estimator 800 for the $j^{th}$ user of an embodiment of the present disclosure employing a parallel decoding type receiver where $3 \le j \le N - 1$. A received signal, $\boldsymbol{y}_j$, is provided to a set of spatial filters, 802, 804 through 806, along with a corresponding channel vector estimate from a prior estimator, $\widehat{\boldsymbol{h}}_1, \widehat{\boldsymbol{h}}_2$, through $\widehat{\boldsymbol{h}}_{j-1}$, to produce a corresponding estimate of the modulated symbol, $x_{d1,j}, x_{d2,j}$, through $x_{dj-1,j}$. Interference cancellation 808 uses the estimates modulated symbols, $x_{d1,j}, x_{d2,j}$, through $x_{dj-1,j}$, along with the channel estimates, $\widehat{\boldsymbol{h}}_1, \widehat{\boldsymbol{h}}_2$, through $\widehat{\boldsymbol{h}}_{j-1}$, to remove interference from the received signal, $\boldsymbol{y}_j$. A channel estimator 810 is then used to generate an estimated channel vector for the $j^{th}$ user, $\hat{\boldsymbol{h}}_j$.

**Joint spatial filtering**

In certain embodiments joint spatial filtering may be advantageously employed in the receiver to support interference cancellation. In mMIMO systems spatial matched filters are optimal for i.i.d. channels. However, some users may stay silent, i.e. not transmit, over pilot symbols of the other users. This allows joint channel estimation of several users. Joint channel estimation is useful for example when the entire interference cannot be cancelled using spatial matched filters as is the case when the receiver does not have access to a large number of active antenna elements such as in conventional MIMO links. In these systems, transmission should be coordinated such that users contributing the most interference should remain silent during time-frequency resource elements over which the associated pilot symbols are transmitted.

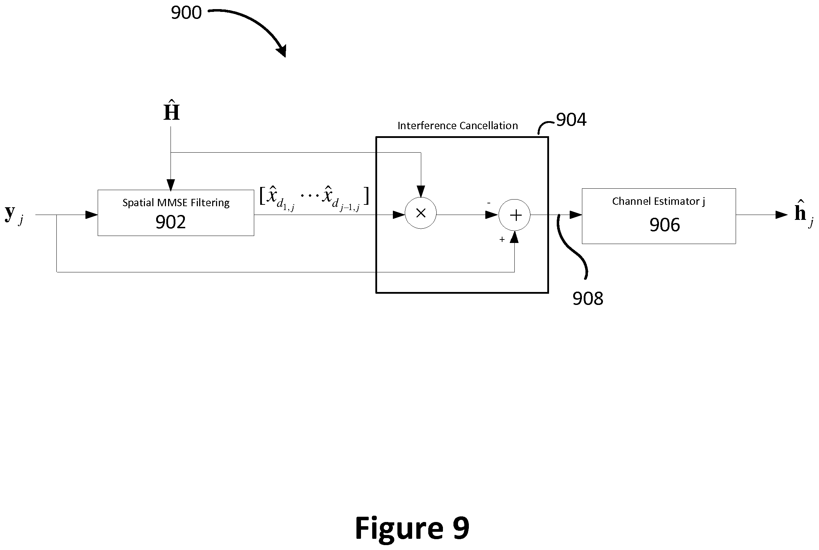

The semi-orthogonal structure described above allows joint spatial filtering to be used for interference cancellation over the pilot symbols. Figure 9 illustrates a block diagram of a channel estimator 900 employing joint spatial filtering for interference cancellation. Channel estimation for the $j^{th}$ user can be done in the following fashion. First, construct an accumulated channel matrix $\hat{\boldsymbol{H}}$ where the channel matrix is constructed from the set of channel vectors: $\hat{\boldsymbol{H}} = [\hat{\boldsymbol{h}}_1 \ \hat{\boldsymbol{h}}_2 \ ... \ \hat{\boldsymbol{h}}_{j-1}]$. Then estimate the symbol vector $[\hat{x}_{d1,j}, ..., \hat{x}_{dj-1,j}]$ of the interfering users using joint spatial processing 902 on the input signal $\boldsymbol{y}_j$ of the $j^{th}$ user, for example by using the minimum mean square error (MMSE) via the accumulated channel matrix $\hat{\boldsymbol{H}}$. The estimated symbol vector, $[\hat{x}_{d1,j}, ..., \hat{x}_{dj-1,j}]$, can then be used along with the accumulated channel matrix $\hat{\boldsymbol{H}}$, and the input signal, $\boldsymbol{y}_j$, for interference cancellation 904 to obtain a substantially interference free input signal 908. A channel estimator 906 can then use the input signal 908 to produce an estimate, $\hat{\boldsymbol{h}}_j$ of the channel vector for the $j^{th}$ user.

**Uplink *Aggregate* Throughput**

A better understanding of the performance improvements can be achieved by looking at the interplay among the involved parameters and in particular the effect of a finite number of antennas. To do this we will utilize the spatially processed signal, $\tilde{y}_i$, and study the effective residual interference after spatial filtering, error propagation of the channel estimation, and the AWGN. In the following analysis the achievable rate per user is investigated then the aggregate rate (i.e sum-rate) is computed. The following analysis finds a lower bound on the capacity based on the worst case uncorrelated noise analysis. It can be shown that a receiver with sequential decoding and the transmitter according to the SOMA transmission scheme described herein can achieve an aggregate rate, $R_\Sigma$, as shown in equation (18):

$$R_\Sigma = \sum_{k=1}^{N-1} R_k$$

$$R_k = \frac{1}{N} \left\{ \begin{array}{c} E \log\left(1 + \dfrac{\left\|\widehat{\boldsymbol{h}}_k\right\|^2 p_k}{\sigma^2 + N_{e_k} p_k + \sum_{i\neq k} p_i}\right) + \\ \displaystyle\sum_{l=k+1}^{N-1} E \log\left(1 + \dfrac{\left\|\widehat{\boldsymbol{h}}_k\right\|^2 p_k}{\sigma^2 + N_{e_k} p_k + p_{pl} + \sum_{i\neq k} p_i}\right) \end{array} \right\} \qquad (18)$$

where

-   $R_k$ denotes the achievable rate of user $k$;
-   $\hat{\boldsymbol{h}}_k$ denotes the estimated channel vector between user $k$ and the receiver, which has the dimension $N_b \times 1$;
-   $N_b$ is the number of antennas in the receiver;
-   $N$ is the coherence interval;
-   $p_k$ denotes the transmit power of user $k$ used for the data transmission;
-   $p_{pl}$ denotes the transmit power of user $k$ used for the pilot transmission;
-   $\sigma^2$ denotes the noise variance; and

$$N_{e_k} = \frac{\sigma^2 + \sum_{j=1}^{k-1} N_{e_j} p_j}{\sigma^2 + p_{pk} + \sum_{j=1}^{k-1} N_{e_j} p_j}$$

denotes the MMSE channel estimation error for user $k$ if there is no interference similar to the baseline.

The aggregate rate in equation (18) can be bounded as shown in equation (19):

$$\frac{1}{N} \sum_{k=1}^{N-1} \left\{ \begin{array}{l} \log\left(1 + \dfrac{p_k}{\dfrac{(1-N_{e_k})^{-1}}{N_t - 1}\sigma^2 + \dfrac{(1-N_{e_k})^{-1}}{N_t - 1}N_{e_k}p_k + \dfrac{(1-N_{e_k})^{-1}}{N_t - 1}\sum_{i \neq k}p_i}\right) + \\ \displaystyle\sum_{l=k+1}^{N-1}\log\left(1 + \dfrac{p_k}{\dfrac{(1-N_{e_k})^{-1}}{N_t - 1}\sigma^2 + \dfrac{(1-N_{e_k})^{-1}}{N_t - 1}N_{e_k}p_k + \dfrac{(1-N_{e_k})^{-1}}{N_t - 1}p_{pl} + \dfrac{(1-N_{e_k})^{-1}}{N_t - 1}\sum_{i\neq}}\right) \end{array} \right.$$

$$\leq R_\Sigma \leq \qquad\qquad (19)$$

$$\frac{1}{N} \sum_{k=1}^{N-1} \left\{ \begin{array}{l} \log\left(1 + \dfrac{p_k}{\dfrac{(1-N_{e_k})^{-1}}{N_t}\sigma^2 + \dfrac{(1-N_{e_k})^{-1}}{N_t}N_{e_k}p_k + \dfrac{(1-N_{e_k})^{-1}}{N_t}\sum_{i \neq k}p_i}\right) + \\ \displaystyle\sum_{l=k+1}^{N-1}\log\left(1 \dfrac{p_k}{\dfrac{(1-N_{e_k})^{-1}}{N_t}\sigma^2 + \dfrac{(1-N_{e_k})^{-1}}{N_t}N_{e_k}p_k + \dfrac{(1-N_{e_k})^{-1}}{N_t}p_{pl} + \dfrac{(1-N_{e_k})^{-1}}{N_t}\sum_{i\neq}}\right) \end{array} \right.$$

Equation (19) illustrates a lower bound showing how increasing the number of antennas can suppress the effect of inter-user interferences both for pilot and data symbols, AWGN, and the channel estimation error. In summary, the above result outlines the benefit of the mMIMO communications where the inverse number of antennas reflects the rate by which the impediments due to the AWGN, inter-user interference and the channel estimation error vanish.

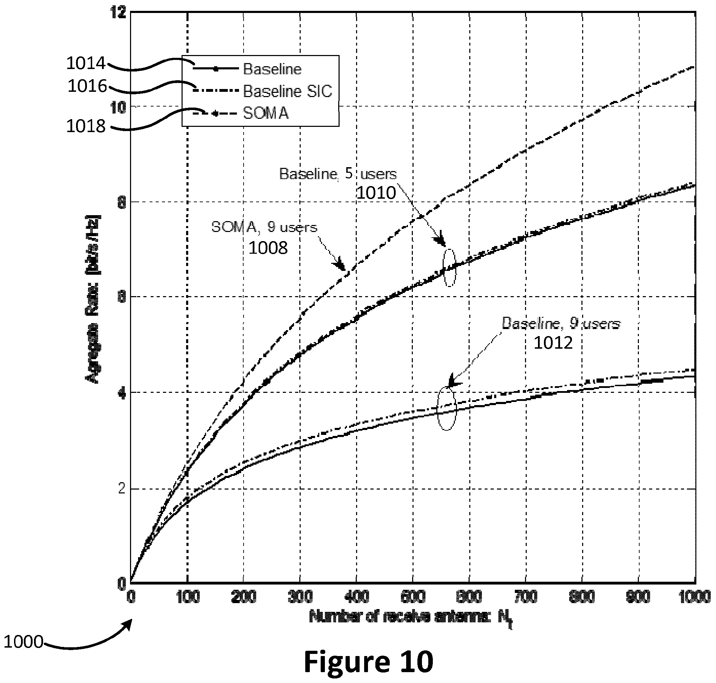

In a representative numerical example of the aggregate rate or sum rate, Figure 10 illustrates a graph 1000 comparing the aggregate rate as a function of number of receive antennas for a system using the SOMA transmission scheme described above, with a baseline approach similar to the FDD scheme or TDD with uplink transmission described above. The graph 1000 shows aggregate throughput in bits per second per Hertz along the vertical axis and the number of receive antennas $N_b$ along the horizontal axis. This example considers a channel that is Rayleigh Fading with the number of time slots in each coherence interval $N$ = **10,** and the power per coherence interval $p_k$ = **-10 dB,** and power per pilot symbol $p_{pl}$ = $\sigma^2$ = **0 [dB]**. Here the total power per coherence interval for all schemes is set to $p_k$ = **-10 dB** for each user which is divided uniformly over all active resource elements, or time slots for data transmission in all cases.

For the baseline system consider two cases. First, with the number of users $K$ = 5 which is optimal for the situation where the number of receive antennas $N_b$ >> 1, and secondly with the number of users $K$ = 9 which is the maximum number of users in a SOMA transmission scheme for a coherence interval with 10 time slots. The graph or plot indicated by numeral 1012 show performance of the baseline system. Plot 1016 illustrates with sequential interference cancellation and curve 1018 without sequential interference cancellation when configured with the maximum number of users $K$ = 9. For the illustrated system the interference cancellation in the baseline does not provide noticeable gain as the users operate at low power. The graphs or plots indicated by numeral 1010 illustrate the result of reducing the number of users in the baseline solution to $K$ = 5 to boost the aggregate rate. Although aggregate throughput is increased, this leads to a service drop of four (4) users. In contrast, the SOMA solution illustrated in graph or plot 1008 shows that SOMA can significantly outperforms the baseline solution.

The above example shows that the baseline solution illustrated in plots 1016, 1018 performs poorly when it is configured with the maximum number of users. For this set of parameters the interference cancellation in the baseline does not provide a noticeable gain as the users operate at low power. The SOMA scheme generally described herein, on the average, provides slightly less transmission rate, this is due to the fact that the scheme schedules more users which create additional interference. However the net effect is a significant increase in the aggregate rate as illustrated by graph 1008. Note that the outer-sum in Equation (18), for a given index, gives the rate of different users where each user consumes a different number of resource elements, and also observes different amounts of inter-user interference due to the construction of the SOMA transmission scheme 500 illustrated in Figure 5.

**Downlink Transmission Rate**

For downlink transmission using TDD, in cases where the channel varies slowly in time, the channel estimation may be redone after decoding of the uplink data. By doing this the interference can be removed after decoding and estimation of the uplink data resulting in the same data rate as in the baseline. However, for a fast varying channel, outdating of the channel may be avoided and interference from the data symbols can be handled, by using the channel estimation scheme illustrated in Figures 7 and 8 above. Parallel decoding may be used in these schemes because channel estimation is done prior to decoding of the uplink data. With the channel estimators, 700, 800, described above, the estimated channel gains can be used immediately for downlink transmission.

To illustrate how the SOMA transmission scheme 500 affects downlink performance, look at the second user, which has a pilot symbol superposed on a data symbol of the previous user thereby introducing interference into the pilot symbol. Referring again to Figure 7, the channel estimation for this exemplary case is illustrated. First, there is an estimate of the transmitted symbol using the matched filtering 702 along with the estimated channel gain of the first user. This provides the estimate of the data symbol of the first user as shown in equation (20):

$$\hat{x}_{d1} = x_{d1} + \hat{z}_1 \qquad (20)$$

where $\hat{z}_1$ denotes the effective noise after spatial filtering using the channel vector of the first user. Using an approach similar to that described above for analysis of the uplink data, it can be shown that the effective noise $\hat{z}_1$ has the variance

$\dfrac{\sigma^2 + N_{e_1}}{N_b}$ which is inversely proportional to the number of antennas. Using the data estimate shown in equation (20), interference cancellation 706 can be performed for the pilot of the second user. This shows that the channel estimates degrade with an additional noise which has the variance inversely proportional to the number of receive antennas, $\dfrac{1}{N_b}$. Therefore, for large enough number of antennas the local channel estimator for parallel decoding is able to provide good channel estimates with negligible degradation in downlink transmission in mMIMO. This is similar to uplink performance where the net effect of impediments reduces linearly with the number of antennas.

**Apparatus**

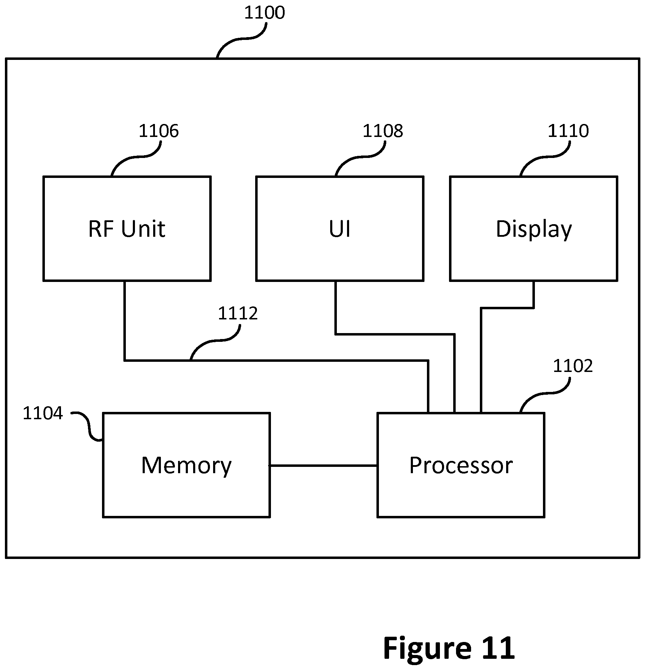

Figure 11 illustrates a block diagram of one embodiment of an exemplary apparatus for wireless communications 1100 appropriate for implementing the SOMA transmission schemes described herein. In the example, the apparatus 1100 includes a processing apparatus 1102 coupled to a computer memory 1104, a radio frequency transmitter 1106, a radio frequency receiver 1108, and a user interface (UI) 1110. In certain embodiments interaction with a user is not required, thus in these embodiments the UI 1108 may be omitted from the apparatus 1100. The apparatus 1100 may be used as mobile station or for various types of wireless communications user equipment, also referred to as mobile communications equipment or devices, such as a cell phones, smart phones, tablet devices, etc.

The processing apparatus 1102 may be a single processing device or may comprise a plurality of processing devices including special purpose devices such as for example it may include digital signal processing (DSP) devices, microprocessors, or other specialized processing device as well as one or more general purpose processors. The memory 1104 is coupled to the processing apparatus 1102 and may be a combination of various types of computer memory such as for example volatile memory, non-volatile memory, read only memory (ROM), or other types of computer memory and stores computer program instructions which may be organized as method groups including an operating system, applications, file system, as well as other computer program instructions for other desirable computer implemented methods such as methods that support the SOMA transmission techniques disclosed herein. Also included in the memory 1104 are program data and data files which are stored and processed by the computer program instructions.

The transmitter 1106 is coupled to the processing apparatus 1102 and configured to transmit radio frequency signals based on digital data 1112 exchanged with the processing apparatus 1102. The transmitted radio frequency signals may include symbol sequences such as the symbol sequences used in a SOMA transmission scheme 500 and/or the signals may include coordination information. The receiver 1108 is coupled to the processing apparatus 1102 and is configured to receive radio frequency signals which may include the information about the number of time slots to wait before beginning transmission of a symbol sequence, or alternatively in an access node the receiver 1108 may include a plurality of antennas configured to receive symbol sequences such as the symbol sequences used in a SOMA transmission scheme as described above. The receiver 1108 provides digital information 1114 describing the received signals to the processing apparatus 1102. The receiver 1108 includes analog to digital converters to digitize received RF signals at a desired sampling rate, such as about 30 megahertz (MHz) sample rate, and send the digitized RF signals 1114 to the processing apparatus. Conversely the transmitter 1106 may include digital to analog converters to convert digital data 1112 received by the RF unit 1106 from the processing apparatus 1102 into analog signals in preparation for transmission.

The UI 1110 may include one or more well-known user interface elements such as a touch screen, keypad, buttons, as well as other elements for inputting data with a user. The UI 1110 may also include a display unit configured to display a variety of information appropriate for a user equipment or access node and may be implemented using any of well-known display types such as organic light emitting diodes (OLED), liquid crystal display (LCD), as well as less complex elements such as LEDs or indicator lamps, etc.. The communications apparatus 1100 is appropriate for implementing SOMA techniques described herein and above with reference to Figure 5.

## Transmitter Method

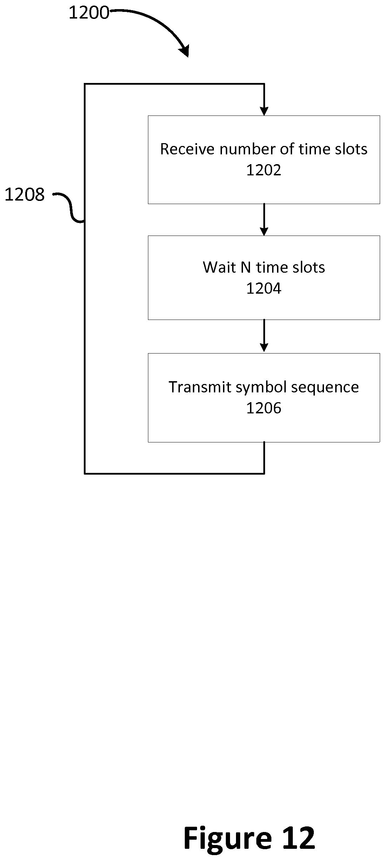

Referring now to Figure 12 there can be seen a flow chart of a method 1200 for transmitting data in a wireless communication system incorporating a SOMA transmission scheme such as the SOMA transmission scheme 500 described herein and with reference also to Figure 5. The method 1200 is used to coordinate transmission of data from a plurality of transmitters within a series of coherence intervals. During each coherence interval, a number (N) of symbol time slots is indicated 1202 from a controller, where the controller is part of an access node as will be described further below, and the controller selects the number of time slots to coordinate transmission of data from a plurality of transmitters. The transmitter then waits 1204 the number (N) of symbol time slots received from the controller. The number (N) of symbol time slots may be any number from zero to $N - 1$ where $N$ is the number of time slots in the coherence interval. The transmitter then transmits its symbol sequence 1206. The symbol sequence transmitted in step 1206 generally includes a pilot symbol followed directly by one or more data symbols as described above and with reference to Figure 5. In certain embodiments it is advantageous to transmit a larger amount of reference signals. In these embodiments the pilot symbol may be replaced with a pilot sequence that includes more than one pilot symbol. The method 1200 then repeats 1208 during the next coherence interval. Method 1200 is repeated during subsequent coherence intervals until the transmitter has completed transmission of all data needing transmission. In certain embodiments the number (N) of symbol time slots the transmitter waits may be varied in subsequent coherence intervals in order to more fairly share the available transmission bandwidth or to allow transmitter needing to transmit larger amounts of data to transmit longer symbol sequences, i.e. to transmit symbol sequences having a larger number of data symbols.

## Access Node

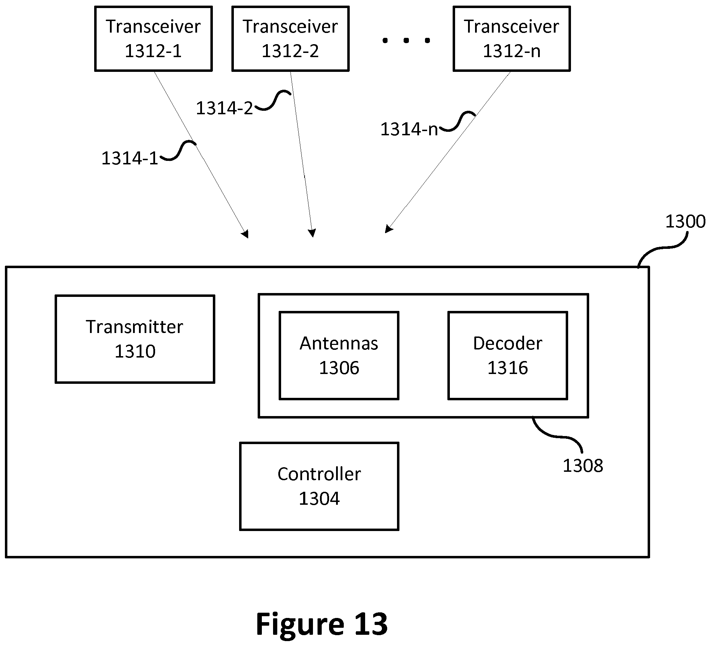

As described above the SOMA transmission scheme 500 significantly improves throughput of a wireless communication system at the cost of increased inter-symbol interference. The effects of the added interference can be mitigated or removed by the novel receiver structures described above such as the sequential spatial filtering receiver 600 illustrated in Figure 6 and the parallel decoding scheme based on a local channel estimator structure 700. These techniques can be combined to form an access node 1300 as illustrated by the block diagram shown in Figure 13. The access node 1300 has a controller 1304 configured to coordinate transmissions from a number n of transceivers 1312-1, 1312-2, through 1312-n, according to the SOMA transmission scheme 500 described above. The controller 1304 uses a transmitter 1310 to send information to the transceivers 1312-1, 1312-2, through 1312-n, including a number of time slots to wait before beginning transmission of a symbol sequence 1314-1, 1314-2, through 1314-n. Each symbol sequence 1314 conforms to the symbol sequences 504 of transmission scheme 500 described above with reference to Figure 5. Each symbol sequence 1314 is transmitted within a coherence interval and is received in the access node 1300 by an antenna array 1306 that includes a number $N_b$ of antennas. The antenna array 1306 is coupled to a receiver 1308. The receiver 600 illustrated in Figure 6 and described above shows a possible implementation form of the receiver 1308. The receiver 1308 de-multiplexes the symbol streams received from the antennas 1306 then decodes 1316 each symbol stream to recover data transmitted by the transceivers 1312-1, 1312-2, through 1312-n. The decoder 1316 may employ any of the aforementioned decoding techniques described above such as sequential special filtering, parallel decoding, or joint special filtering. It should be noted that the partitioning of functionality within the access node 1300, such as the receiver block 1308, decoder block 1316, and controller block 1304, is done as an aid to understanding only and other apportionments may be contemplated without straying from the scope of the present disclosure.

The controller 1304 has access to information derived by the receiver 1308 along with other information about the transceivers 1312-1, 1312-2, through 1312-n. The controller 1304 can use this information to determine which transceivers should begin transmitting earlier in a subsequent coherence interval and which transceivers 1312-1, 1312-2, through 1312-n, should be scheduled to begin transmitting their symbol sequence 1314, 504 later in the coherence interval. Scheduling of the transceivers 1312-1, 1312-2, through 1312-n, is accomplished by determining a number of time slots to wait from the start of a coherence interval before a transceiver begins transmitting it symbol sequence. By sending a different number of time slots to wait to each transceiver the controller 1304 can ensure that only one symbol sequence begins during a time slot which also ensures that only one pilot symbol is transmitted during a time slot. In certain embodiments the controller 1304 determines a number of time slots to wait for each transceiver 1312-1, 1312-2, through 1312-n, based on an amount of data to be transmitted by each transceiver 1312-1, 1312-2, through 1312-n, where transceivers having more data to send are sent a lesser number of time slots to wait than receivers having a less data to send. Alternatively, the controller 1304 can use information about the amount of interference a transceiver 1312-1, 1312-2, through 1312-n, induces on the transmissions of other transceivers 1312-1, 1312-2, through 1312-n, to determine the number of time slots to wait for each transceiver. For example a controller may send a lower number of time slots to transceivers that induce lower interference and schedule transceivers inducing greater interference later in a coherence interval.

**Access Node Method**

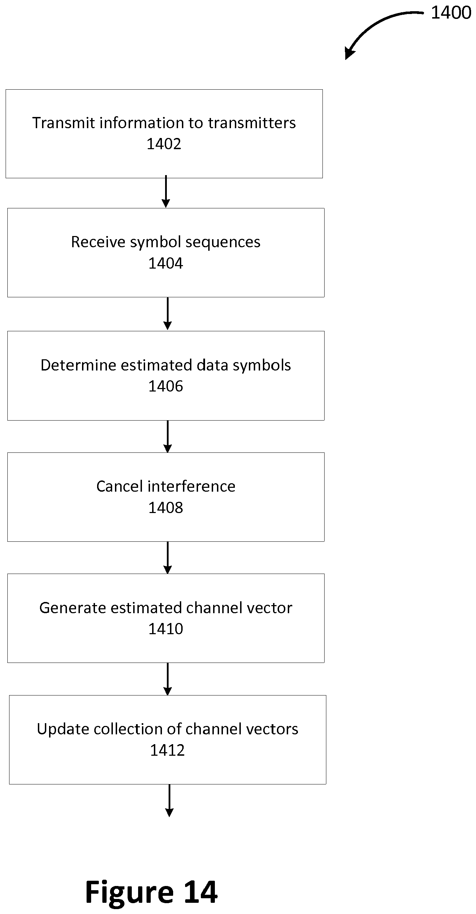

Figure 14 illustrates a flow chart of method 1400 for use in an access node of a wireless communications system such as the access node 1300 described above. The method 1400 may be used to coordinate transmission of a number of symbol sequences transmitted from multiple transmitters and to receive and decode the data from each transmitter at the access node. The access node transmits 1402 information to each of the transmitters. This information includes a number of time slots to wait after the start of a coherence interval before beginning transmission of a symbol sequence. Each transmitter is configured to transmit a symbol sequence such as the symbol sequence 504 of the SOMA transmission scheme 500. The symbol sequences are received 1404 by the access node by a plurality of antennas and the received signals are then processed to determine estimations of the data symbols 1406 contained in the received signals. The estimated data symbols from earlier symbol sequences are then used to cancel interference 1408 from the pilot symbol of a subsequent symbol sequence. Once the interference is cancelled an estimated channel vector is created 1410 then the estimated channel vector is added to the collection of channel vectors for use in determining data symbols 1406 and cancelling interference 1408 from subsequent symbol sequences.

Thus, while there have been shown, described and pointed out, fundamental novel features of the invention as applied to the exemplary embodiments thereof, it will be understood that various omissions and substitutions and changes in the form and details of devices and methods illustrated, and in their operation, may be made by those skilled in the art without departing from the scope of the invention. It is the intention, therefore, to be limited only as indicated by the scope of the claims appended hereto.

**Claims**

1. An access node (1300) comprising:

   a controller (1304) configured to coordinate transmission of a plurality of symbol sequences (1314, 504) in a coherence interval (506) by transmitting information to a plurality of transmitters, the information indicating a number of time slots in the coherence interval (506) after which a transmitter receiving said information shall begin transmitting its symbol sequence (1314, 504);
   a receiver (1308) comprising a plurality of antennas (1306) and configured to receive the plurality of symbol sequences; and
   a decoder (1316) configured to decode the plurality of symbol sequences (1314, 504) based on the coordination of the transmission of the plurality of symbol sequences,
   wherein the decoder (1316) is configured to detect a pilot symbol of a second symbol sequence (504-2) based on a superposition of the pilot symbol with a data symbol of a first symbol sequence (504-1) and based on an estimation of the data symbol.

2. The access node of claim 1, wherein the controller (1304) is configured to select a number of time slots indicated to a transmitter based on an amount of interference the transmitter (1312) generates in the plurality of symbol sequences (1314, 504), wherein transmitters (1312) generating a lesser amount of interference are sent a lower number of time slots than transmitters (1312) generating a greater amount of interference.

3. The access node (1300) of claims 1 or 2, wherein the number of time slots in the coherence interval (506) is larger than the number of transmitters in the plurality of transmitters (1312).

4. The access node (1300) of any of the preceding claims 1 through 3, wherein the access node is configured to coordinate the transmission of the plurality of symbol sequences (1314, 504) such that all symbol sequences in the plurality of symbol sequences share the same time-frequency resources.

5. The access node (1300) of any of the preceding claims 1 through 4, wherein the controller (1304) is configured to provide the information transmitted to the plurality of transmitters such that the information indicates a different number of time slots for different transmitters.

6. The access node (1300) of any of the preceding claims 1 through 5, wherein the first symbol sequence (1314, 504) is the first symbol sequence received in the coherence interval (506), and
wherein the decoder (600) is configured to estimate a first channel gain associated with the first symbol sequence based on the first symbol sequence and not any other symbol sequence.

7. The access node of any of the preceding claims 1 through 6, wherein the controller (1304) is further configured to vary the number of time slots indicated in the information to a particular transmitter (1312) in subsequent coherence intervals (506).

8. The access node of any of the preceding claims 1 through 7, wherein the decoder (1304) is configured to estimate a second channel vector associated with the second symbol sequence by:

determining a first channel vector associated with the first symbol sequence;
determining the estimation of the data symbol using spatial filtering of the received plurality of symbol sequences based on an estimation of the first channel vector;
decoding the estimation of the data symbol to obtain a binary data associated with the data symbol;
regenerating a data symbol based on the binary data;
cancelling interference from the pilot symbol based on the regenerated data symbol to create a substantially interference free pilot symbol; and
generating the estimated second channel vector based on the substantially interference free pilot symbol.

9. The access node of claim 8, wherein the decoder (1316) is configured to perform a cyclic redundancy check, CRC, on the binary data, and to, when the CRC is a pass, use the regenerated data symbol to estimate the second channel vector, and to, when the CRC is a fail, not use the regenerated data symbol.

10. The access node of claims 8 or 9, wherein decoding (1316) the estimation of the data symbol comprises detecting the estimation of the data symbol.

11. The access node of any of the preceding claims 1 through 7, wherein the decoder (1316) is configured to estimate a second channel vector by:

determining a first channel vector associated with the first symbol sequence;
determining the estimation of the data symbol using spatial filtering of the received plurality of symbol sequences based on an estimation of the first channel vector;
cancelling interference from the pilot symbol based on the estimation of the data symbol to create a substantially interference free pilot symbol; and
generating the estimated second channel vector based on the substantially interference free pilot symbol.

12. The access node of claim 11, wherein the decoder (1316) is configured to determine a plurality of estimated channel vectors corresponding to the plurality of symbol sequences (504), and subsequently decode the plurality of symbol sequences in parallel based on the plurality of estimated channel vectors.

13. The access node according to claim 12, wherein the decoder (1316) is configured to construct a channel matrix from the plurality of estimated channel vectors and to estimate the data symbols of interfering users using joint spatial processing based on the channel matrix.

**EP 3 152 849 B1**

14. A method for coordinating transmission of a plurality of symbol sequences in a coherence interval, the method comprising:

transmitting information (1402) to a plurality of transmitters, the information indicating a number of time slots in the coherence interval after which a transmitter receiving said information shall begin transmitting its symbol sequence;

receiving the plurality of symbol sequences (1404) using a plurality of receive antennas, wherein the plurality of symbol sequences comprises one or more superposed data symbols superposed with a pilot symbol;

determining one or more estimated data symbols (1406) by spatial filtering of the one or more superposed data symbols based on one or more estimated channel vectors, wherein each of the one or more estimated channel vectors corresponds to a symbol sequence in the plurality of symbol sequences;

cancelling interference (1408) from the pilot symbol to generate a substantially interference free pilot signal, the cancelling based on the one or more estimated data symbols;

generating an estimated channel vector (1410) for one symbol sequence in the plurality of symbol sequences based on the substantially interference free pilot symbol associated with the one symbol sequence; and

including the estimated channel vector (1412) in the one or more estimated channel vectors.

15. The method according to claim 14, wherein the number of time slots transmitted to a particular transmitter is varied in subsequent coherence intervals.

16. The method according to claim 14 or 15, further comprising:

decoding the one or more estimated data symbols to obtain a binary data associated with the one or more data symbols;

regenerating the one or more data symbols based on the binary data; and

cancelling interference from the pilot symbol based on the regenerated one or more data symbols to create a substantially interference free pilot symbol.

17. The method according to any of the preceding claims 14 through 16, wherein a cyclic redundancy check, CRC, is determined on the binary data, and to, when the CRC is a pass, use the regenerated data symbol to estimate the second channel vector, and to, when the CRC is a fail, not use the regenerated data symbol.

18. The method according to claim 14 or 15, wherein an estimated channel vector is determined sequentially for each symbol sequence in the plurality of symbol sequences during successive time slots in the coherence interval, then all the symbol sequences in the plurality of symbol sequences are decoded in parallel based on the determined estimated channel vectors.

19. A computer program comprising a program code for performing a method according to any of claims 14 to 18, when the computer program runs on a computer.

**Patentansprüche**

1. Zugangsknoten (1300), umfassend:

eine Steuerung (1304), die konfiguriert ist, um die Übertragung einer Vielzahl von Symbolfolgen (1314, 504) in einem Kohärenzintervall (506) durch Übertragen einer Information an eine Vielzahl von Sendern zu koordinieren, wobei die Information eine Anzahl von Zeitschlitzen in dem Kohärenzintervall (506) angibt, nach denen ein Sender, der die Information empfängt, mit der Übertragung seiner Symbolfolgen (1314, 504) beginnen soll;

einen Empfänger (1308), der eine Vielzahl von Antennen (1306) umfasst und konfiguriert ist, um die Vielzahl von Symbolfolgen zu empfangen; und

einen Decoder (1316), der konfiguriert ist, um die Vielzahl von Symbolfolgen (1314, 504) basierend auf der Koordination der Übertragung der Vielzahl von Symbolfolgen zu dekodieren,

wobei der Decoder (1316) konfiguriert ist, um ein Pilotsymbol einer zweiten Symbolfolge (504-2) basierend auf einer Überlagerung des Pilotsymbols mit einem Datensymbol einer ersten Symbolfolge (504-1) und basierend auf einer Schätzung des Datensymbols zu erkennen.

2. Zugangsknoten nach Anspruch 1, wobei die Steuerung (1304) konfiguriert ist, um eine Anzahl von Zeitschlitzen, die einem Sender angezeigt werden, basierend auf einer Größe der Interferenz, die der Sender (1312) in der Vielzahl von Symbolfolgen (1314, 504) erzeugt, auszuwählen,

wobei an Sender (1312), die eine geringere Größe von Interferenz erzeugen, eine kleinere Anzahl von Zeitschlitzen gesendet wird als an Sender (1312), die eine größere Größe von Interferenz erzeugen.

3. Zugangsknoten (1300) nach Anspruch 1 oder 2, wobei die Anzahl von Zeitschlitzen in dem Kohärenzintervall (506) größer ist als die Anzahl von Sendern in der Vielzahl von Sendern (1312).

4. Zugangsknoten (1300) nach einem der vorhergehenden Ansprüche 1 bis 3, wobei der Zugangsknoten konfiguriert ist, um die Übertragung der Vielzahl von Symbolfolgen (1314, 504) so zu koordinieren, dass alle Symbolfolgen in der Vielzahl von Symbolfolgen die gleichen Zeit-Frequenz-Ressourcen teilen.

5. Zugangsknoten (1300) nach einem der vorhergehenden Ansprüche 1 bis 4, wobei die Steuerung (1304) konfiguriert ist, um die an die Vielzahl von Sendern übertragene Information so bereitzustellen, dass die Information eine unterschiedliche Anzahl von Zeitschlitzen für verschiedene Sender anzeigt.

6. Zugangsknoten (1300) nach einem der vorhergehenden Ansprüche 1 bis 5, wobei die erste Symbolfolge (1314, 504) die erste im Kohärenzintervall (506) empfangene Symbolfolge ist, und

wobei der Decoder (600) konfiguriert ist, um eine erste Kanalverstärkung, die der ersten Symbolfolge zugeordnet ist, basierend auf der ersten Symbolfolge und nicht irgendeiner anderen Symbolfolge zu schätzen.

7. Zugangsknoten nach einem der vorhergehenden Ansprüche 1 bis 6, wobei die Steuerung (1304) ferner konfiguriert ist, um die Anzahl von Zeitschlitzen, die in der Information für einen bestimmten Sender (1312) angezeigt wird, in nachfolgenden Kohärenzintervallen (506) zu variieren.

8. Zugangsknoten nach einem der vorhergehenden Ansprüche 1 bis 7, wobei der Decoder (1304) konfiguriert ist, um einen zweiten Kanalvektor, welcher der zweiten Symbolfolge zugeordnet ist, durch Folgendes zu schätzen:

Bestimmen eines ersten Kanalvektors, welcher der ersten Symbolfolge zugeordnet ist;
Bestimmen der Schätzung des Datensymbols unter Verwendung einer räumlichen Filterung der empfangenen Vielzahl von Symbolfolgen basierend auf einer Schätzung des ersten Kanalvektors;
Dekodieren der Schätzung des Datensymbols, um die dem Datensymbol zugeordneten Binärdaten zu erhalten;
erneutes Erzeugen eines Datensymbols basierend auf den Binärdaten;
Beseitigen der Interferenz von dem Pilotsymbol basierend auf dem erneut erzeugten Datensymbol, um ein im Wesentlichen interferenzfreies Pilotsymbol zu erstellen; und
Erzeugen des geschätzten zweiten Kanalvektors basierend auf dem im Wesentlichen interferenzfreien Pilotsymbol.

9. Zugangsknoten nach Anspruch 8, wobei der Decoder (1316) konfiguriert ist, um eine zyklische Redundanzprüfung (Cyclic Redundancy Check, CRC) an den Binärdaten durchzuführen und, wenn die CRC erfolgreich verläuft, das neu erzeugte Datensymbol zum Schätzen des zweiten Kanalvektors zu verwenden und, wenn die CRC nicht erfolgreich verläuft, das neu erzeugte Datensymbol nicht zu verwenden.

10. Zugangsknoten nach Anspruch 8 oder 9, wobei das Dekodieren (1316) der Schätzung des Datensymbols das Erkennen der Schätzung des Datensymbols umfasst.

11. Zugangsknoten nach einem der vorhergehenden Ansprüche 1 bis 7, wobei der Decoder (1316) konfiguriert ist, um einen zweiten Kanalvektor durch Folgendes zu schätzen:

Bestimmen eines ersten Kanalvektors, welcher der ersten Symbolfolge zugeordnet ist;
Bestimmen der Schätzung des Datensymbols unter Verwendung einer räumlichen Filterung der empfangenen Vielzahl von Symbolfolgen basierend auf einer Schätzung des ersten Kanalvektors;
Beseitigen der Interferenz von dem Pilotsymbol basierend auf der Schätzung des Datensymbols, um ein im Wesentlichen interferenzfreies Pilotsymbol zu erstellen; und
Erzeugen des geschätzten zweiten Kanalvektors basierend auf dem im Wesentlichen interferenzfreien Pilotsymbol.

12. Zugangsknoten nach Anspruch 11, wobei der Decoder (1316) konfiguriert ist, um eine Vielzahl von geschätzten Kanalvektoren zu bestimmen, die der Vielzahl von Symbolfolgen (504) entsprechen, und anschließend die Vielzahl von Symbolfolgen basierend auf der Vielzahl von geschätzten Kanalvektoren parallel zu dekodieren.

13. Zugangsknoten nach Anspruch 12, wobei der Decoder (1316) konfiguriert ist, um eine Kanalmatrix aus der Vielzahl von geschätzten Kanalvektoren aufzubauen und die Datensymbole von interferierenden Benutzern unter Verwendung einer gemeinsamen räumlichen Verarbeitung basierend auf der Kanalmatrix zu schätzen.

14. Verfahren zum Koordinieren der Übertragung einer Vielzahl von Symbolfolgen in einem Kohärenzintervall, das Verfahren umfassend:

Übertragen einer Information (1402) an eine Vielzahl von Sender, wobei die Information eine Anzahl von Zeitschlitzen in dem Kohärenzintervall angibt, nach denen ein Sender, der die Information empfängt, mit der Übertragung seiner Symbolfolgen beginnen soll;

Empfangen der Vielzahl von Symbolfolgen (1404) unter Verwendung einer Vielzahl von Empfangsantennen, wobei die Vielzahl von Symbolfolgen ein oder mehrere überlagerte Datensymbole umfasst, die mit einem Pilotsymbol überlagert sind;

Bestimmen von einem oder mehreren geschätzten Datensymbolen (1406) durch räumliches Filtern des einen oder der mehreren überlagerten Datensymbole basierend auf einem oder mehreren geschätzten Kanalvektoren, wobei jeder der einen oder mehreren geschätzten Kanalvektoren einer Symbolfolge in der Vielzahl von Symbolfolgen entspricht;

Beseitigen von Interferenz (1408) von dem Pilotsymbol, um ein im Wesentlichen interferenzfreies Pilotsymbol zu erzeugen, wobei das Beseitigen auf dem einen oder den mehreren geschätzten Datensymbolen basiert;

Erzeugen eines geschätzten Kanalvektors (1410) für eine Symbolfolge in der Vielzahl von Symbolfolgen basierend auf dem im Wesentlichen interferenzfreien Pilotsymbol, das der einen Symbolfolge zugeordnet ist; und

Aufnehmen des geschätzten Kanalvektors (1412) in dem einen oder den mehreren geschätzten Kanalvektoren.

15. Verfahren nach Anspruch 14, wobei die Anzahl der an einen bestimmten Sender übertragenen Zeitschlitze in nachfolgenden Kohärenzintervallen variiert wird.

16. Verfahren nach Anspruch 14 oder 15, ferner umfassend:

Dekodieren des einen oder der mehreren geschätzten Datensymbole, um Binärdaten zu erhalten, die dem einen oder den mehreren Datensymbolen zugeordnet sind;

erneutes Erzeugen des einen oder der mehreren Datensymbole basierend auf den Binärdaten; und

Beseitigen der Interferenz von dem Pilotsymbol basierend auf den erneut erzeugten einen oder den mehreren Datensymbolen, um ein im Wesentlichen interferenzfreies Pilotsymbol zu erstellen.

17. Verfahren nach einem der vorhergehenden Ansprüche 14 bis 16, wobei eine zyklische Redundanzprüfung (Cyclic Redundancy Check, CRC) an den Binärdaten bestimmt wird und, wenn die CRC erfolgreich verläuft, das neu erzeugte Datensymbol zum Schätzen des zweiten Kanalvektors verwendet wird und, wenn die CRC nicht erfolgreich verläuft, das neu erzeugte Datensymbol nicht verwendet wird.

18. Verfahren nach Anspruch 14 oder 15, wobei ein geschätzter Kanalvektor der Reihe nach für jede Symbolfolge in der Vielzahl von Symbolfolgen während aufeinanderfolgender Zeitschlitze in dem Kohärenzintervall bestimmt wird, danach werden alle Symbolfolgen in der Vielzahl von Symbolfolgen basierend auf den bestimmten geschätzten Kanalvektoren parallel dekodiert.

19. Computerprogramm, umfassend einen Programmcode zum Durchführen eines Verfahrens nach einem der Ansprüche 14 bis 18, wenn das Computerprogramm auf einem Computer ausgeführt wird.

**Revendications**

1. Noeud d'accès (1300), comprenant :

un dispositif de commande (1304) configuré pour coordonner une transmission d'une pluralité de séquences de symboles (1314, 504) dans un intervalle de cohérence (506) en transmettant des informations à une pluralité d'émetteurs, les informations indiquant un nombre de créneaux temporels dans l'intervalle de cohérence (506) après lequel l'émetteur qui reçoit lesdites informations, commencera à transmettre sa séquence de symboles (1314, 504) ;

un récepteur (1308) comprenant une pluralité d'antennes (1306) et configuré pour recevoir la pluralité de séquences de symboles ; et

un décodeur (1316) configuré pour décoder la pluralité de séquences de symboles (1314, 504) en se basant sur la coordination de la transmission de la pluralité de séquences de symboles,

dans lequel le décodeur (1316) est configuré pour détecter un symbole pilote d'une seconde séquence de symboles (504-2) en se basant sur une superposition du symbole pilote avec un symbole de données d'une première séquence de symboles (504-1) et en se basant sur une estimation du symbole de données.

2. Noeud d'accès selon la revendication 1, dans lequel le dispositif de commande (1304) est configuré pour sélectionner un nombre de créneaux temporels indiqué à un émetteur en se basant sur une quantité d'interférence que l'émetteur (1312) génère dans la pluralité de séquences de symboles (1314, 504), dans lequel un nombre moindre de créneaux temporels est envoyé aux émetteurs (1312) générant une quantité moindre d'interférence qu'aux émetteurs (1312) générant une quantité supérieure d'interférence.

3. Noeud d'accès (1300) selon les revendications 1 ou 2, dans lequel le nombre de créneaux temporels dans l'intervalle de cohérence (506) est plus grand que le nombre d'émetteurs dans la pluralité d'émetteurs (1312).

4. Noeud d'accès (1300) selon l'une quelconque des précédentes revendications 1 à 3, dans lequel le noeud d'accès est configuré pour coordonner la transmission de la pluralité de séquences de symboles (1314, 504) de telle sorte que toutes les séquences de symboles dans la pluralité de séquences de symboles partagent les mêmes ressources temps-fréquence.

5. Noeud d'accès (1300) selon l'une quelconque des précédentes revendications 1 à 4, dans lequel le dispositif de commande (1304) est configuré pour fournir les informations transmises à la pluralité d'émetteurs de telle sorte que les informations indiquent un nombre différent de créneaux temporels pour différents émetteurs.

6. Noeud d'accès (1300) selon l'une quelconque des précédentes revendications 1 à 5, dans lequel la première séquence de symboles (1314, 504) est la première séquence de symboles reçue dans l'intervalle de cohérence (506) et

dans lequel le décodeur (600) est configuré pour estimer un premier gain de canal associé à la première séquence de symboles en se basant sur la première séquence de symboles et non pas sur une quelconque autre séquence de symboles.

7. Noeud d'accès selon l'une quelconque des précédentes revendications 1 à 6, dans lequel le dispositif de commande (1304) est en outre configuré pour faire varier le nombre de créneaux temporels indiqué dans les informations à un émetteur particulier (1312) dans des intervalles de cohérence ultérieurs (506).

8. Noeud d'accès selon l'une quelconque des précédentes revendications 1 à 7, dans lequel le décodeur (1304) est configuré pour estimer un second vecteur de canal associé à la seconde séquence de symboles en :

déterminant un premier vecteur de canal associé à la première séquence de symboles ;

déterminant l'estimation du symbole de données à l'aide d'un filtrage spatial de la pluralité reçue de séquences de symboles en se basant sur une estimation du premier vecteur de canal ;

décodant l'estimation du symbole de données pour obtenir une donnée binaire associée au symbole de données ;

regénérant un symbole de données en se basant sur la donnée binaire ;

supprimant une interférence du symbole pilote en se basant sur le symbole de données régénéré pour créer un symbole pilote sensiblement dépourvu d'interférence ; et

générant le second vecteur de canal estimé en se basant sur le symbole pilote sensiblement dépourvu d'interférence.

9. Noeud d'accès selon la revendication 8, dans lequel le décodeur (1316) est configuré pour effectuer un contrôle par redondance cyclique (CRC) sur la donnée binaire et, lorsque le contrôle CRC est une réussite, pour utiliser le symbole de données régénéré pour estimer le second vecteur de canal et, lorsque le contrôle CRC est un échec, pour ne pas utiliser le symbole de données régénéré.

**10.** Noeud d'accès selon la revendication 8 ou 9, dans lequel le décodage (1316) de l'estimation du symbole de données consiste à détecter l'estimation du symbole de données.

**11.** Noeud d'accès selon l'une quelconque des précédentes revendications 1 à 7, dans lequel le décodeur (1316) est configuré pour estimer un second vecteur de canal en :

déterminant un premier vecteur de canal associé à la première séquence de symboles ;
déterminant l'estimation du symbole de données à l'aide d'un filtrage spatial de la pluralité reçue de séquences de symboles en se basant sur une estimation du premier vecteur de canal ;
supprimant une interférence du symbole pilote en se basant sur l'estimation du symbole de données pour créer un symbole pilote sensiblement dépourvu d'interférence ; et
générant le second vecteur de canal estimé en se basant sur le symbole pilote sensiblement dépourvu d'interférence.

**12.** Noeud d'accès selon la revendication 11, dans lequel le décodeur (1316) est configuré pour déterminer une pluralité de vecteurs de canal estimés correspondant à la pluralité de séquences de symboles (504) et pour décoder, par la suite, la pluralité de séquences de symboles en parallèle en se basant sur la pluralité de vecteurs de canal estimés.

**13.** Noeud d'accès selon la revendication 12, dans lequel le décodeur (1316) est configuré pour construire une matrice de canal à partir de la pluralité de vecteurs de canal estimés et pour estimer les symboles de données d'utilisateurs interférant à l'aide d'un traitement spatial commun basé sur la matrice de canal.

**14.** Procédé pour coordonner une transmission d'une pluralité de séquences de symboles dans un intervalle de cohérence, le procédé consistant :

à transmettre des informations (1402) à une pluralité d'émetteurs, les informations indiquant un nombre de créneaux temporels dans l'intervalle de cohérence après lequel un émetteur qui reçoit lesdites informations, commencera à transmettre sa séquence de symboles ;
à recevoir la pluralité de séquences de symboles (1404) à l'aide d'une pluralité d'antennes de réception, dans lequel la pluralité de séquences de symboles comprend un ou plusieurs symboles de données superposés qui sont superposés avec un symbole pilote ;
à déterminer un ou plusieurs symboles de données estimés (1406) au moyen d'un filtrage spatial du ou des symboles de données superposés en se basant sur un ou
plusieurs vecteurs de canal estimés, chacun des vecteurs de canal estimés correspondant à une séquence de symboles dans la pluralité de séquences de symboles ;
à supprimer une interférence (1408) du signal pilote pour générer un symbole pilote sensiblement dépourvu d'interférence, la suppression étant basée sur le ou les symboles de données estimés ;
à générer un vecteur de canal estimé (1410) pour une séquence de symboles dans la pluralité de séquences de symboles en se basant sur le symbole pilote sensiblement dépourvu d'interférence associé à l'unique séquence de symbole ; et
à inclure le vecteur de canal estimé (1412) dans le ou les vecteurs de canal estimés.

**15.** Procédé selon la revendication 14, dans lequel le nombre de créneaux temporels transmis à un émetteur particulier est varié dans des intervalles de cohérence ultérieurs.

**16.** Procédé selon la revendication 14 ou 15, consistant en outre :

à décoder le ou les symboles de données estimés pour obtenir une donnée binaire associée au ou aux symboles de données ;
à regénérer le ou les symboles de données en se basant sur la donnée binaire ; et
à supprimer une interférence du symbole pilote en se basant sur le ou les symboles de données régénérés pour créer un symbole pilote sensiblement dépourvu d'interférence.

**17.** Procédé selon l'une quelconque des précédentes revendications 14 à 16, dans lequel un contrôle par redondance cyclique (CRC) est déterminé sur la donnée binaire et, lorsque le contrôle CRC est une réussite, pour utiliser le symbole de données régénéré pour estimer le second vecteur de canal et, lorsque le contrôle CRC est un échec, pour ne pas utiliser le symbole de données régénéré.

**18.** Procédé selon la revendication 14 ou 15, dans lequel un vecteur de canal estimé est déterminé de manière séquentielle pour chaque séquence de symboles dans la pluralité de séquences de symboles pendant des créneaux temporels successifs dans l'intervalle de cohérence, ensuite toutes les séquences de symboles dans la pluralité de séquences de symboles sont décodées en parallèle en se basant sur les vecteurs de canal estimés déterminés.

**19.** Programme d'ordinateur comprenant un code de programme pour réaliser un procédé selon l'une quelconque des revendications 14 à 18 lorsque le programme d'ordinateur s'exécute sur un ordinateur.

**Figure 1**

EP 3 152 849 B1

**Figure 2**

**Figure 3**

Figure 4

Figure 5

**Figure 6**

Figure 7

**Figure 8**

EP 3 152 849 B1

900

$\hat{\mathbf{H}}$

Interference Cancellation

904

$\mathbf{y}_j$ → | Spatial MMSE Filtering 902 | $[\hat{x}_{d_{1,j}} \cdots \hat{x}_{d_{j-1,j}}]$ → ⊗ → − + → | Channel Estimator j 906 | → $\hat{\mathbf{h}}_j$

908

**Figure 9**

**Figure 10**

EP 3 152 849 B1

1100

1106 — RF Unit

1108 — UI

1110 — Display

1112

1104 — Memory

1102 — Processor

**Figure 11**

1200

1208

Receive number of time slots
1202

Wait N time slots
1204

Transmit symbol sequence
1206

# Figure 12

Transceiver
1312-1

Transceiver
1312-2

. . .

Transceiver
1312-n

1314-2

1314-n

1314-1

1300

Transmitter
1310

Antennas
1306

Decoder
1316

1308

Controller
1304

**Figure 13**

39

1400

```
┌─────────────────────────────────────┐
│  Transmit information to transmitters │
│                1402                   │
└─────────────────────────────────────┘
                   │
                   ▼
┌─────────────────────────────────────┐
│      Receive symbol sequences        │
│                1404                   │
└─────────────────────────────────────┘
                   │
                   ▼
┌─────────────────────────────────────┐
│    Determine estimated data symbols  │
│                1406                   │
└─────────────────────────────────────┘
                   │
                   ▼
┌─────────────────────────────────────┐
│          Cancel interference         │
│                1408                   │
└─────────────────────────────────────┘
                   │
                   ▼
┌─────────────────────────────────────┐
│   Generate estimated channel vector  │
│                1410                   │
└─────────────────────────────────────┘
                   │
                   ▼
┌─────────────────────────────────────┐
│   Update collection of channel vectors│
│                1412                   │
└─────────────────────────────────────┘
                   │
                   ▼
```

# Figure 14

**EP 3 152 849 B1**

**Patent documents cited in the description**

- EP 1249980 A2
- EP 2151936 A1
- US 20100278132 A1